# EUROPEAN PATENT SPECIFICATION

(11) **EP 3 973 196 B1**
(45) Date of publication and mention of the grant of the patent: **24.04.2024**
(21) Application number: 20731313.1
(22) Date of filing: 19.05.2020
(51) Int. Cl.: F16B 2/18, E04D 15/00, F16B 5/06, F16B 7/04, F16B 2/08, E04G 5/04, E04G 21/32

(54) **A GRABBER APPARATUS AND METHOD FOR USING THE SAME**
GREIFERVORRICHTUNG UND VERFAHREN ZUR VERWENDUNG DAVON
APPAREIL AGRIPPEUR ET PROCÉDÉ D'UTILISATION ASSOCIÉ

(30) Priority: 22.05.2019 US 201916419445; 18.05.2020 US 202016876674
(43) Date of publication of application: 30.03.2022
(73) Proprietor: Ballantyne, Flent, McKinney, TX 75071 (US)
(72) Inventor: BALLANTYNE, Steven, McKinney, TX 75071 (US); BLISS, Mark, D., McKinney, TX 75071 (US); BALLANTYNE, Flent, McKinney, TX 75071 (US)
(74) Representative: Murgitroyd & Company
(86) International application number: PCT/US2020/033547
(87) International publication number: WO 2020/236783

(56) References cited:
- WO-A1-99/49154
- WO-A1-2006/105837
- WO-A1-2013/168839
- DE-U- 1 852 202
- US-A1- 2012 097 406

## Description

### CROSS-REFERENCE TO RELATED APPLICATIONS

This International Patent Application claims priority from the US Patent Application No. 16/419,445, filed on May 22, 2019 and titled "Grabber Tool and System".

The present application also claims priority from the US patent application no. 16/876,674 filed on May 18, 2020.

### TECHNICAL FIELD

Conventional ways of fastening objects to structural elements (such as rafter beams and rafter tails, for example) frequently involve attaching the objects by screwing or nailing them into place. Other utilized approaches involve the use of clamps or hooks, which hang from the top of suspended beams.

However, it is well recognized that these conventional techniques have shortcomings. For instance, the use of screws or nails may cause aesthetic and/or structural damage to the hosting structure. Conventional clamps may also cause damage and have limited surface area, which in turn limits the weight of objects that can be safely supported with such clamps. Hooks hung over the top of beams have similar problems, and, in addition, require an accessible top surface, which is not available in many instances (for example, rafter beams in a building).
US 2012/097406 A1 discloses a fire sprinkler support assembly which includes a leg configured to extend transverse to each of a pair of adj acent parallel spaced beams. The leg includes levered clamp assemblies that are configured for connecting and supporting each end of the leg to a corresponding one of the beams. The levered clamp assemblies include a first plate and a second plate, each plate configured to straddle the beam. The levered clamp assemblies also include a lever assembly. The lever assembly includes a rod passing through corresponding rod openings in the first and second plates, and a lever pivotally connected to one end of the rod. The lever includes a cam surface disposed adjacent to the first plate. The lever assembly is configured to reduce spacing between the plates upon actuation of the lever, whereby the leg is secured to the beam.
WO 99/49154 A discloses a safety system for roof workers comprisng roof fixing means adapted to be fixed to one edge of a roof. The roof fixing means may be a roof anchor having a hook portion which is hooked to the lower edge of the roof cladding, such as a metal sheet or roofing tile. A clamping bolt fixes the roof anchor to the cladding. Alternatively, the roof fixing means may be a clamp adapted to be mounted to a rafter or similar roof frame member. The clamp has a toothed pawl which resists movement of the clamp along the rafter. A clamping bolt can also be provided to fix the clamp relative to the rafter.
WO 2006/105837 A1 discloses a device for fixing roof battens to rafters or counter-battens comprises a support bar with a fixed first stop and a first clamping jaw element arranged displaceably at a distance from the first stop, a pivot lever being mounted on the support bar and being operatively connected to the displaceable first clamping jaw so that, when the pivot lever is actuated, the distance between the immovably arranged first stop and the displaceable first clamping jaw element can be varied.
DE 18 52 202 U discloses an adjustable mechanical bar gauge.
WO 2013/168839 A1 discloses a fixing bracket of a fire sprinkler, wherein a cam lever and a contact piece are coupled to a center bracket to clamp a sprinkler.

### SUMMARY

Embodiments of the invention provide an improved approach to hanging objects from rafter beams, for example, or other similarly shaped structures: the proposed approach has the benefit (in comparison with the conventionally-used methods) that it causes little or even no aesthetic damage to supporting structures and no structural damage either. Once an embodiment is engaged with a beam or beams, a given object is supported by one of its operationally-complementary components (As a person of skill will readily recognize, the following disclosure may make references to "rafters," "beams," "rafter beams," and "rafter tails," as examples of supporting structures. The term "beam" defines, as would be understood in context of this disclosure, any of various pieces of metal, wood (2x4, or an assembly of 2x4's), stone, etc. The term "rafter" defines and refers to any of a series of timbers or the like, usually having a pronounced slope, for supporting the sheathing and covering of a roof. A "rafter tail" is a portion of a rafter that projects beyond an exterior wall. It should be understood that these terms are not meant or intended to limit the scope of the invention to use of or with these specific objects, which are used as non-limiting examples. It should also be understood that embodiments of the current invention are suitable for use with any other structure similar to those discussed herein (e.g., other structures with rectangular cross-sections). Accordingly, it is understood that what is discussed is, generally, the affixation of an object to a supporting structure.)

One of multiple coupling devices configured according to the idea of the invention may be used along the length of a beam, or rafter, or another supporting structure to allow objects large and small, heavy and light to be supported using attachments that couple to each of these (multiple) coupling devices. Similarly, the coupling devices may be attached to more than one beam further enabling easy hanging of spatially-extended objects.

According to a first aspect of the invention, there is provided an anchoring system as defined by claim 1. In one implementation of the anchoring system, at least one of the following conditions is satisfied:
- a) the anchoring system further comprising at least one of a coil spring disposed on the second plate in a space between the curved surface and the first plate and a torsion spring cooperated with the lever arm to bias the lever arm towards the second plate;
- b) the curved surface of the lever body is serrated;
- c) the affixation member extends through the second plate under the lever body; and
- d) the first and second plates are wings of a single angled member.

In substantially any embodiment, the anchoring system may additionally include a supporting plate defining a plane of the supporting plate and extended along and parallel to the second plate (when the supporting plate has a slot therein, the affixation member passes through the slot to freely move along the slot until the affixation member is tightened and to form a stationary unit of the supporting plate with the coupling device when the affixation member is tightened). Here, the coupling device is affixed to the supporting plate at a first point. Additionally or in the alternative, in this case the supporting plate may include at least one portion that is substantially transverse to the plane of the supporting plate and an opening in the supporting plate corresponding to the at least one portion.

In substantially every embodiment, the anchoring system may be additionally equipped with at least one of
- a) an auxiliary coupling device that has the same structure as the coupling device (here, the auxiliary coupling device is disposed next to the coupling device or at a second point of the supporting plate);
- b) an extension plate hingedly attached to the supporting plate on a side thereof that is opposite to the coupling device (here, the extension plate is configured to be rotatable about a hinge to assume a first closed position in which the extension plate is substantially parallel to the supporting plate and a second open position in which the extension plate is substantially transverse to the supporting plate);
- c) an auxiliary angled member having two wings and configured as a stopper that is either (c 1) attached at the first wing to the extension plate on a side thereof opposite to the hinge and configured to cooperate, at the second wing, with a surface of the supporting plate when the extension plate is in the second open position; or (c2) attached at the second wing to the surface of the supporting plate opposite and configured to cooperate, at the first wing, with the extension plate on the side thereof opposite to the hinge when the extension plate is in the second open position;
- d) a first magnet attached to the auxiliary angled member and a second magnet disposed between the first magnet and either the surface of the supporting plate or the side of the extension plate to magnetically interact with the first magnet when the extension plate is in the second open position and to prevent the extension plate from moving towards the first position in absence of external force applied to the extension plate; and
- e) first and second cushions respectively affixed to surfaces of the first and second plates.

Alternatively or in addition, substantially any embodiment of the anchoring system can be configured to satisfy at least one of the following conditions: a) the anchoring system is comprising a connecting gear member that is movably (e.g., swingingly) attached to the affixation member or the supporting plate or the extension plate, and b) the opening in the supporting plate has an area substantially congruent with an area of at least one portion of the supporting plate.

Alternatively or in addition, substantially any implementation of the anchoring system can be configured to satisfy at least one of the following conditions: (i) a length of the extension plate is substantially equal to a length of the supporting plate; and (ii) the connecting gear member includes at least one of a clip, a snap hook, a carabiner, or a member dimensioned as a loop attached to the affixation member substantially irremovably.

According to a further aspect of the invention, there is provided a method for using the anchoring system of the first aspect with the fixed structural component, the method comprising the features of claim 9.

Alternatively or in addition, an implementation of the method can be performed when at least one of the following conditions is satisfied: a) the anchoring system includes at least one of a coil spring disposed on the second plate in a space between the curved surface and the first plate and a torsion spring cooperated with the lever arm to bias the lever arm towards the second plate; b) the curved surface of the lever body is serrated; c) the affixation member extends through the second plate under the lever body, and d) the first and second plates are wings of a single angled member.

In substantially any embodiment of the method, and when the used anchoring system additionally includes a supporting plate defining a plane of the supporting plate and extended along and parallel to the second plate, the supporting plate having a slot therein), the method may optionally include the step of either attaching the supporting plate to and in parallel with the second plate while passing the affixation member through the slot to freely move along the slot (if the supporting plate is not attached to the coupling device), or the combination of steps of determining a desired position of the affixation member at a first point in the slot, and tightening the affixation member to bring the second plate and the supporting plate in contact with one another at multiple points to form a stationary unit of the supporting plate with the coupling device (when the supporting plate is attached to the coupling device).

Alternatively or in addition - and in substantially every implementation of the method - the method may be complemented with at least one of the following steps:
- a) hingedly cooperating an extension plate to the supporting plate on a side thereof that is opposite to the coupling device, the extension plate configured to be rotatable about a hinge to assume a first closed position in which the extension plate is substantially parallel to the supporting plate and a second open position in which the extension plate is substantially transverse to the supporting plate;
- b) affixing an auxiliary angled member that has two wings and is configured as a stopper either (b 1) at a first wing of the auxiliary angled member to the extension plate on a side thereof opposite to the hinge such that - when the extension plate is in the second open position - a second wing of the auxiliary angled member is cooperated with a surface of the supporting plate; or (b2) at the second wing of the auxiliary angled member to the surface of the supporting plate such that - when the extension plate is in the second open position - the first wing of the auxiliary angled member is cooperated with the extension plate on the side thereof opposite to the hinge;
- c) disposing a first magnet at the auxiliary angled member and a second magnet between the first magnet and either the surface of the supporting plate or the side of the extension plate, to bring the first and second magnets in direct magnetic interaction with one another when the extension plate is in the second open position such as to prevent the extension plate from moving towards the first position in absence of external force applied to the extension plate; and
- d) placing first and second cushions respectively on surfaces of the first and second plates.

If and when the reference beam is a rafter beam under a roof and when the extension plate is in the second open position under the roof, the method may include the step of rolling an auxiliary wheeled member along the roof until wheels on one axle of the auxiliary are located under the roof in contact with the extension plate.

### BRIEF DESCRIPTION OF THE DRAWINGS

Advantages of embodiments of the present invention will be apparent from the following detailed description of the exemplary embodiments thereof, which description should be considered in conjunction with the accompanying generally not-to-scale drawings, in which:
FIG. 1A is a perspective view of an embodiment of the anchoring system of the invention configured to non-destructively anchor objects to rafter beams, rafter tails, and similar supporting structures.
FIG. 1B is a cross-sectional view of the anchoring system related to that of FIG. 1A in use, anchored/affixed to two rafter tails or beams, and supporting a plate extending vertically below the system.
FIG. 1C is a schematic side view of a coupling device or sub-system of the embodiment of the anchoring system (shown, for example, in FIGs. 1A and 1B).
FIG. 2A presents a perspective view of an embodiment related to that depicted in FIGs. 1A and 1B, but including four of the fastening components (coupling sub-systems) shown in FIG. 1C, as opposed to two.
FIG. 2B is a perspective view depicting a portion of the embodiment of FIG. 2A fastened to a corresponding rafter beam or tail.
FIG. 3A is a perspective view showing a pair of coupling devices structured similarly to those that form part of the embodiment(s) of FIGs. 2A and 2B and other similar embodiments, and used in the same embodiment of the anchoring apparatus side by side. The lever arms on these coupling devices example are longer and weigh more so that the torsion springs may not be necessary.
FIG. 3B is a cross-sectional view showing details of selected structural elements of several embodiments of the anchoring apparatus.
FIG. 4A illustrates a series of four configurations (401, 402, 403, and 404) of an embodiment related to the embodiment of the coupling device shown in FIG. 1C, during the process of installation of the coupling device on the rafter beam.
FIG. 4B showing a perspective view of the embodiment of the coupling sub-system of FIG. 4A with the rafter beam already substantially enclosed in and accommodated within the coupling sub-system such as to be reliably and firmly affixed therein.
FIGs. 4C and 4D illustrate details of non-mutually-exclusive variants of the coupling sub-system of the anchoring system of the invention.
FIGs. 5A and 5B are alternate perspective views of the anchoring system shown in FIGs. 2A and 2B, showing features visually-perceivable from a perspective below the anchoring system. FIG. 5B also depicts the anchoring system in use, being fastened to a pair of rafter beams or tails.
FIG. 6A is a top perspective view of a related embodiment of the anchoring system.
FIG. 6B is a bottom perspective view of the embodiment of FIG. 6A.
FIG. 7A is a perspective view showing the use of the embodiment of the anchoring system of the invention unmovably affixed to two rafter beams of a house to provide a structural support for an "eave hook" device (the Eveook^{™}) during the installation of such device to form a secure attachment to a roof of a building as part of a system for temporary safety rigging for roof workers.
FIG. 7B is a perspective view of a related embodiment of the anchoring system used as a hanger for a potted plant.

In the Drawings, generally, like elements and/or components may be referred to by like numerals and/or other identifiers; not all elements and/or components shown in one Drawing may be necessarily depicted in another for simplicity of illustrations.

### DETAILED DESCRIPTION OF THE INVENTION

Embodiments of the invention address persisting need in a reconfigurable grabber device structured to be attached to a carrying element that is oriented in a substantially any fashion - whether horizontally or with inclination to a reference axis - and configured to provide support for various weighty objects. It is appreciated that, in discussing examples of embodiments below:
- The term "exemplary" if used, is defined to mean "serving as an example, instance, or illustration." Any embodiment described herein as "exemplary" is not necessarily to be construed as preferred or advantageous over other embodiments.
- Terms indicating relative position such as "above," "below," "upper," "lower," etc are used for purposes of illustration only, unless otherwise expressly noted, and are used with reference to the orientation of particular drawings. It should be understood that these terms are not generally meant to indicate a preferred orientation when such an orientation is not inherently or explicitly required.

### Examples of Anchoring Apparatus.

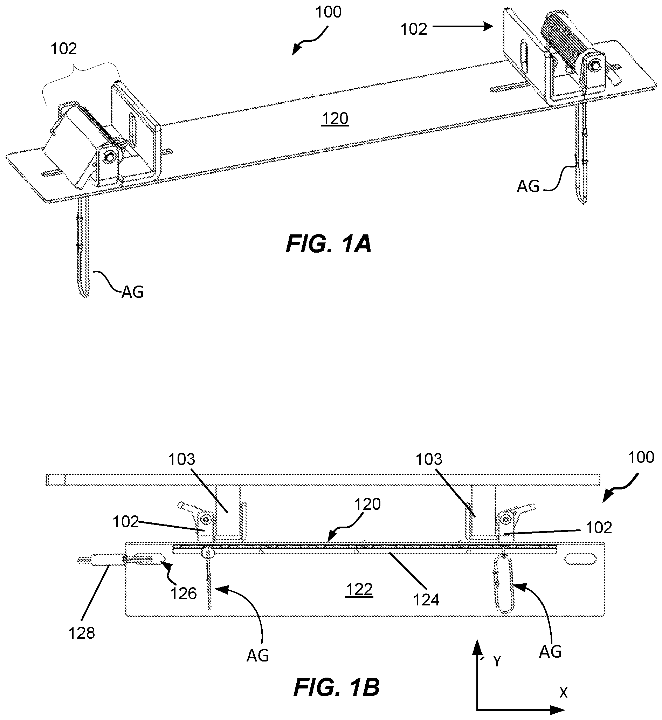

FIG. 1A shows an embodiment 100 of an anchoring apparatus configured according to the idea of the invention. The device combines multiple (as shown - first and second) coupling structures or coupling devices 102 and a plate or substrate 120. The plate 120 is generally transverse to at least a portion of each of the devices 102 and is coupled to these coupling devices 102 such as to support the coupling devices 102 when the embodiment is considered on its own. (In different embodiments, the plate 120 may be configured to support different objects or structures.)

FIG. 1B shows a related variant of the anchoring apparatus 100 (not mutually-exclusive with that FIG. 1A) in a practical situation, shown to support an extension (or extension member) 122 of the plate 120 that is disposed in a plane substantially transversely (and, optionally, even perpendicularly, in its "open" position) with respect to the plate 120, as an example. Here, each of the first and second coupling devices 102 is shown to (optionally - releasably) grasp an auxiliary element 103 (shown in this example as a beam 103, such as a rafter beam or a rafter tail on the exterior of a building) to be attached to this auxiliary structural element 103. When the auxiliary structural element is the rafter beam 103, then as a result of the mechanical cooperation between the coupling devices 102 and the plate 120, the embodiments of the anchoring device 100 is suspended from the beam 103.

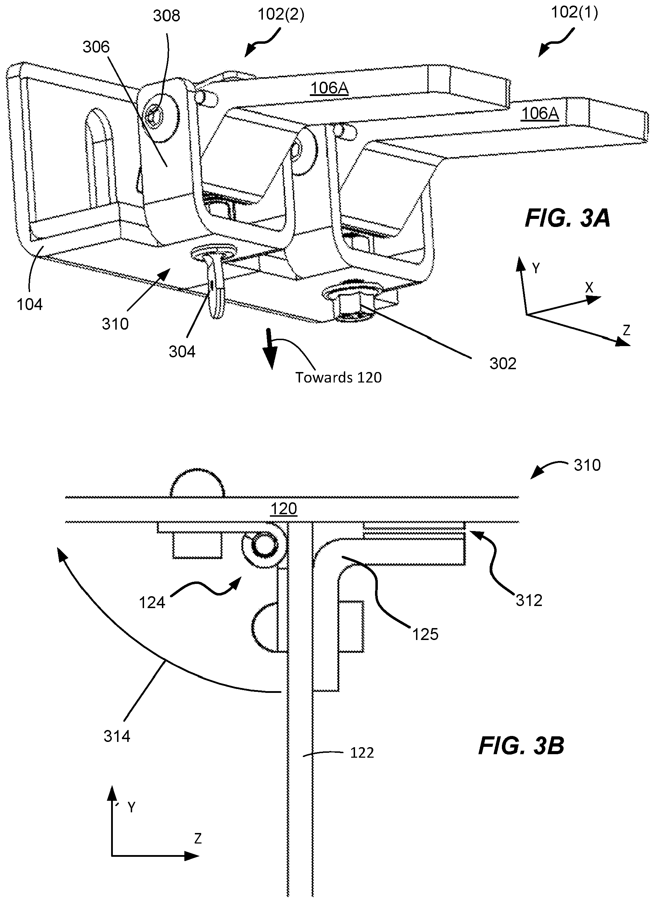

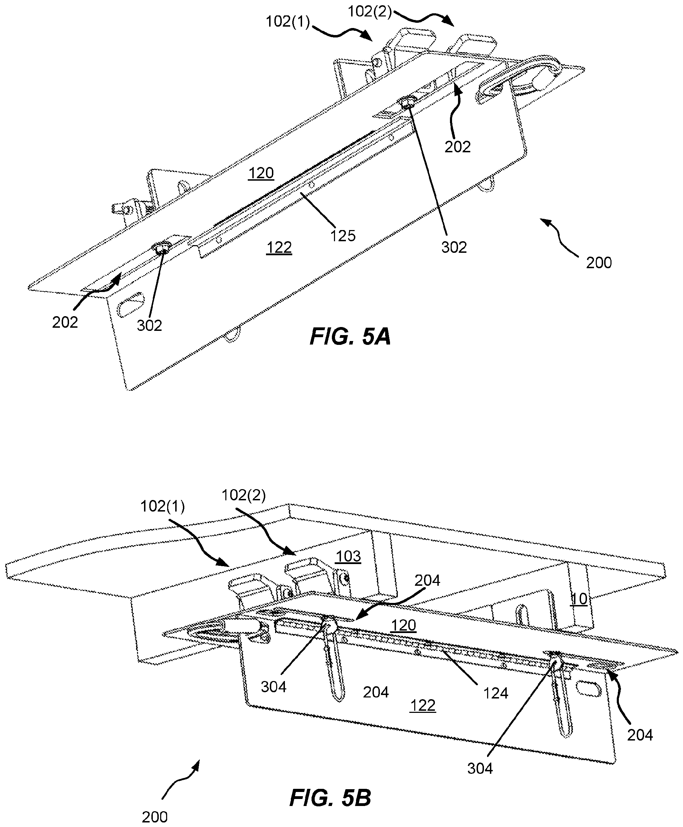

As shown, the extension member 122 is affixed to the plate 120 with a hinge 124 (which affixation is later discussed in more detail in reference to FIG. 3B). The hinge-based cooperation between the plate 120 and the extension member 122 allows for the extension member 122 to swing within the limits defined by the hinge 124 and, when required, be stowed in a position in which the member 122 is oriented substantially parallel to the plate 120, for ease of storage and transportation. (As discussed below, in reference to FIG. 3B or FIG. 5A, for example, certain embodiments of the anchoring apparatus with the hinged plate 120 may additionally, and optionally, include an angled member 125 (i.e., a generally L-shaped bracket such as an angle iron) configured as a mechanical stop on the side opposite to the hinge 124 in order to hold, once employed, the extension 122 in operational position in which the plane of extension 122 is substantially transverse to the plane of the plate 120.) In some embodiments, the perpendicular extension 122 (or other attachment) may additionally include aperture(s) or hole(s) therethrough, such as hole 126 shown in FIG. 1B. When used, such aperture(s) / hole(s) are judiciously configured to align with corresponding hole(s) in the plate 120 (now shown), thereby allowing the perpendicular extension (or other attachment) to be fastened to the plate 120 while stowed using a clip, a snap hook, a carabiner, or another connecting gear member (see, e.g., the element 128 shown in FIG. 1B), rope, or other similar coupling device or arrangement. Alternatively or in addition, in a related embodiment, the plate 120 and an attachment such as the perpendicular extension 122 may have a corresponding set of magnets that hold the attachment against the plate 120 when stowed.

The mechanically-reconfigurable cooperation between the plate 120 and the extension member 122 of an embodiment of the anchoring device (such as, for example, the embodiment 100 of FIG. 1A) is schematically shown in FIG. 3B. FIG. 3B presents a cross-sectional view of the features of a portion 310 of an embodiment of the anchoring device that employs such extension member 122 with the supporting plate 120. (This schematic can also be compared with implementations depicted in FIGs. 1B, 2A, 5A and 5B). In particular, FIG. 3B illustrates that the hinge 124 is fastened (on one side of the extension 122, extending substantially transverse to the plane of the plate) both to the plate 120 and to the extension member 122, for example with appropriate bolts or other affixation members. On the other side of the extension member 122 from the hinge 124, the angled member 125 is positioned and in turn fastened to the extension member 122. A person of skill in the art will readily appreciate that the orientation of the extension 122 in its "open", transverse to the plate 120, position at least in part depends on the dihedral angle that is defined between the wings of the angled member 125: the specific dihedral angle of about 90 degrees, defined between the wings of the angled member 125, can be chosen to maintain the extension member 122 substantially perpendicularly to the plate 120, once the extension 122 is deployed.

Generally, the angled member 125 may be made of any mechanically-strong material - for example a metal, of which iron is but only one choice. Alternatively or in addition to the use of an angled member 125, and in one specific implementation also illustrated in FIG. 3B, first and second magnets 312 are disposed on the angled member 125 and the plate 120 as shown. The magnets 312 are configured with opposite magnet poles facing each other (such that the magnets attract each other), thereby holding the extension member 122 generally transversely (in the "open" state) with respect to the plate 120. The extension member 122 may be rotated, about the hinge axis, into the "stowed" or "closed" position (to be oriented substantially parallel to the plate 120, by moving the extension 122 along a path illustrated with the curved arrow 314. For the simplicity of illustration, the portion 310 in the "stowed" position is not shown. Therefore - and referring again to the schematic of FIG. 1B - when the anchoring device 100 is affixed to the overhanging beam 103 via the coupling devices 102, both the plate 120 and the extension member 122 are supported in such "hung" position under the beam 103.

If and when additional clips, snap hooks, carabiners, or other connecting devices (schematically illustrated as connecting gear *AG*) are accommodated by at least a portion of the embodiment 100 (for example, as carabiners 128 shown in FIG.1B attached to a portion of the device 122 or to the connecting gear member *AG* that may be in turn attached to any part of the affixation member. (Primary purpose of the connecting gear member *AG*, when used with an embodiment, is to provide a means of attaching a carabiner or other connecting device, to any part of the affixation member. For example, the connecting gear member *AG* may attach to a part of the affixation member - that itself may be configured to be detachable/removable from the coupling device - to prevent the part of the affixation from being lost and, therefore, making it easier to transport with a carabiner, by hand, with a rope, or other method.) The connecting gear member *AG* may be structured as a flexible loop(s) that is locked upon itself and movably (in one case - swingingly) passes through a portion of the coupling device 102). Any structural unit attached to the connecting device (whether 128 or *AG*, in this example) is thereby also supported under the beam 103 when the embodiment 100 is attached to a beam or beams.

### Non-Exclusive Embodiment of a Coupling Sub-System of the Anchoring Apparatus and Operation

### Thereof.

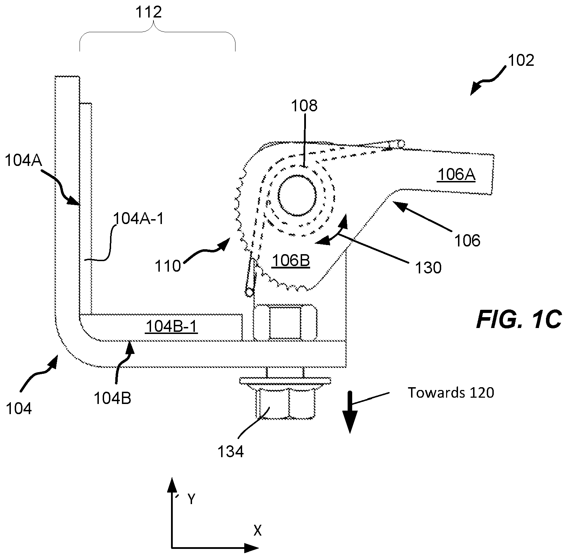

Referring now to FIG. 1C, an example of the coupling device 102 is shown in greater detail. It should be understood that a given embodiment of the anchoring apparatus of the invention may include a single coupling device 102, or any number of such coupling devices, as dictated by a particular application. The coupling device 102 is appropriately configured to implement its operational purpose, which is to engage with, embrace, and substantially-unmovably cling to the supporting structure (such as the beam 103 shown in FIG. 1B) when the device 102 is moved in contact with and/or attached to and upon the beam 103 to have the beam 103 at least partially inserted into a partial enclosure space 112 formed between the cradle element 104 and the lever device 106 of the coupling device 102. Specifically - as a person of ordinary skill in the art will appreciate - this enclosure space 112 corresponds to the volume limited by the surfaces 104A, 104B of the mutually-transverse wings of the cradle element 104 and a facing-the-element 104 surface 110 of the lever device 106. Notably, while the element 104 is shown to be a single, stand-alone angled member (made of metal, for example) that has two wing portions, in a more general case the element 104 can be configured by cooperating first and second plates (corresponding to the wings of the element 104 shown in FIG. 1A) with one another to form a dihedral angle therebetween.

In a simple case, the cradle element 104 may be structured as an angled member (similar to an angle iron), the sides or wings of which provide the surfaces 104A, 104B. In such a case, the lever device 106 may be mounted on or to a portion of or to an extension of one of the wings of the element 104. The lever device 106 in one implementation contains a lever arm 106A attached to a lever body 106B, which lever body has the surface 110. The lever device 106 is oriented such as to have its surface 110 face the cradle element 104, thereby identifying the gap between the surfaces 104A, 110 and, therefore, completing the partial enclosure space 112 (interchangeably referred to as a cradle or cradle space) that is limited at least in two dimensions with the surfaces 104A, 104B, 110. In the side view, seen in FIG. 1C in the xy-plane of the local system of coordinates, the cradle space 112 has an approximately U-shaped profile, while the length of the space 112 along the z-axis of the local system coordinates is substantially defined by the extension of the cradle element 104 and/or the extension of the surface 110 along that z-axis. (It should be understood that the term "U-shaped" is meant to describe the shape of the cradle area 104 in generally loose terms. For example, in some embodiments, the cradle element 104 may have sharp or square corners. In other embodiments, the corners may be rounded. Importantly, when grasping the beam 103, the cradle element 104 makes contact with the beam 103 on or at two substantially parallel sides as well as a third side disposed between those two sides, as illustrated in the figures and described further below.)

Generally, the surfaces 104A, 104B are transverse to one another, and may also be different from one another in shape (in the case of FIG. 1C, however, these surfaces are shown as being substantially planar and approximately perpendicular to one another). In a related embodiment of the element 104, such element may be formed from two or more generally spatially-distinct and separable from one another components that, aggregately, provide the surfaces 104A, 104B. (For example, these spatially-distinct components may be the spatially-independent plates corresponding to the wings of the element 104 shown in FIG. 1C, which plates are dimensioned to be separate components.) Optionally (as shown in the embodiment of FIG. 1C), the surface 110 may be serrated / knurled or have a differently dimensioned surface relief configured to securely engage the surface 110 with a body with which the surface 110 comes in contact - for example, with the supporting structure when a portion of the supporting structure such as beam 103 is positioned into the partial enclosure 112 (that is, between or among the surfaces 104A, 104B, 110) and/or when an attempt is made to separate the already secured on the beam 103 device 102 from the beam 103.

Depending on a particular implementation, surfaces 104A, 104B, and 110 may be formed from various materials (such as metallic materials or plastic materials) and in some cases at least one of the surfaces 104A and 104B may be provided or complemented with a spatially-deformable coating(s) or layer(s) (shown in FIG. 1C as 104A-1, 104B-1) such as layer(s) made of rubber, soft plastic, or any other suitable at least partially squeezable material to maximize the contact area between the cradle element 104 and the auxiliary element to be engaged in the space 112 (such as the beam or supporting structure 103) when surfaces of the auxiliary element that come into contact with the element 104 are not exactly conforming to the shape of the surfaces 104A, 104B. The use of such deformable coatings/layers facilitates a high coefficient of static friction at and along the contact area between the auxiliary element and the coupling device 102 (and, when the auxiliary element is the beam 103 - to help support the weight of the coupling device 102 and anything attached to the coupling device 102 once anchored to the beam 103). The coupling device 102 is appropriately equipped with an affixing feature (a fastener) 134 such as a bolt or a peg, for example, appropriately configured for the attachment of the device 102 to the pate 120 (or vice versa). In a non-exclusively related implementation, layers 104A-1 and/or 104B-1 can be configured to assume more aggressive forms to grip the beam 103, such as a knurl. A layer 104B-1, when present, can be even more deliberately structured because the beam 103 does not slide sideways on the corresponding surface: for example, the surface 104B can be configured to have spikes (instead of an elastomer layer 104-B1) that protrude above the 104B surface at an appropriate distance, for example 1/4 inch to prevent the beam 103 from sliding through the space 112 when the coupler 102 is in a near vertical position.

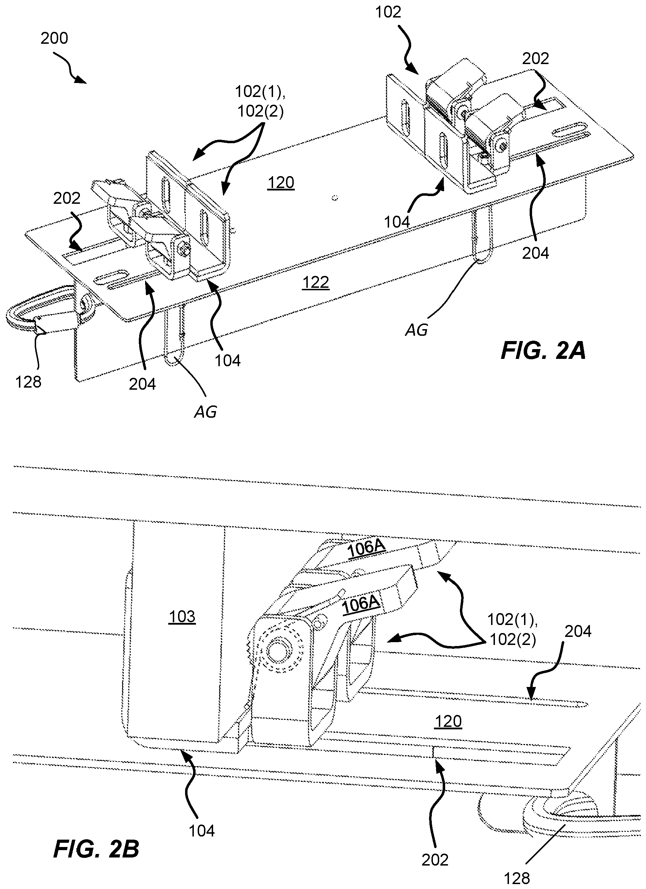

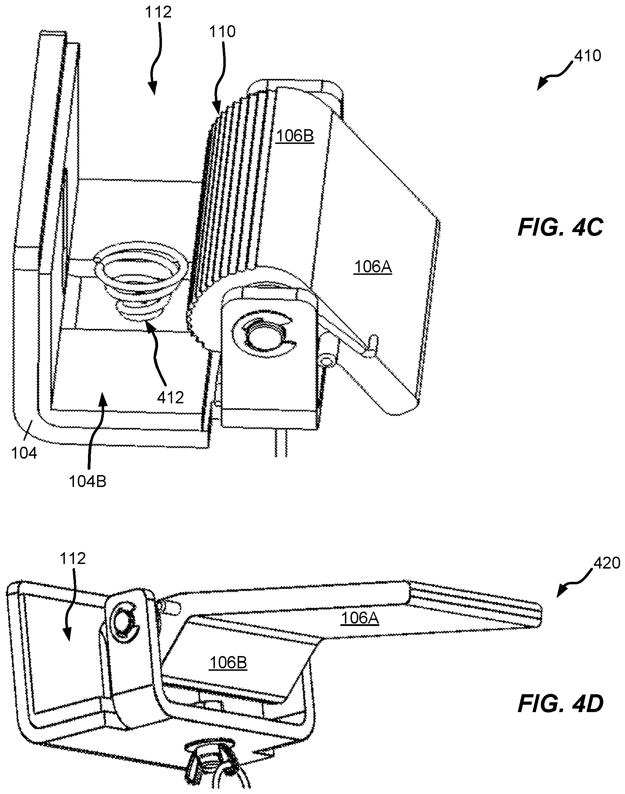

The illustration of the two coupling devices 102(1), 102(2) disposed side-by-side - as shown in the perspective view of FIG. 3A - provides additional detail of the embodiment of a given coupling device. One of the two shown coupling devices - here, the device 102(1) - substantially corresponds to the embodiment of FIG. 1C and is shown with a peg 302 appropriately dimensioned to pass through a corresponding wide slot or opening in the plate 120, while the other coupling device 102(2) is shown with a thumbscrew 304, the shaft of which is judiciously dimensioned to pass through a corresponding slot in the plate 120. (It should be understood that both the peg 302 and the thumbscrew 304 are but specific examples of appropriate affixing structures and may be replaced or substituted in some embodiments with other structures suitable for the purposes described herein. As a non-limiting example, a suitably-positioned bolt with appropriately dimensioned shaft and head may be used in place of the peg 302.) The details of cooperation between a given coupling device 102 and the plate 120 will be discussed below in more detail, in reference to FIGs. 2A, 2B. (An affixation that could replace a thumbscrew 304 in a related embodiment could be a nut or wing nut discussed below in reference to FIG. 4D at the end of a bolt, which blot is attached to and passes through the bottom of the coupling device)

The operation of a given coupling device 102 - and, specifically, its ability to embrace and be affixed to the auxiliary structural component such as a rafter beam 103, for example - is largely defined by the structural configuration of the device 102. In particular, the lever device sub-portion 106 of the coupling is configured such that - when the lever device 106 experiences a force applied thereto by the beam and tending to rotate the lever arm 106A downward (that is, toward the surface 104B, in -y direction as shown in FIG. 1C), the coupling device 102 grasps or embraces the beam 103 by pulling the coupling device 102 (and, with it, the attached plate 120) towards and onto the beam 103 due to the engagement between the surface 110 and the surface of the beam 103 to have the beam 103 accommodated in at least a portion of the cradle space or enclosure space 112. As a result, the beam 103 is grasped, clamped in the cradle space 112 (that is, about three sides - the bottom and two vertical sides) from beneath the beam 103.

In further reference to FIG. 1C in some embodiments the lever device 106 may be additionally equipped with a spring 108 (shown as a torsion spring, for example) disposed to bias the lever arm 106A in the downward direction (that is towards, the "closed" position of the lever device 106). In such optional cases, to couple the anchoring device 100 to one or more beams 103, a user "opens" a cradle space 112 of the coupling device 102 by repositioning or moving the surface area 110 of the lever B in the downward direction shown as -y-direction in FIG. 1C (see double-headed arrow 130), moves the device 102 into a position in which the beam 103 is against and at the entrance of the cradle space 112, and then pushes the level arm 106A against the spring 108 (in the upward direction, along the +y-axis, see arrow 130) until the frictional engagement between the surface 110 of the lever body 106B allows the coupling device to accommodate / surround / house the beam 103 in the space 112. Such process of coupling between the beam 103 and the device 102 may be accomplished in more than one way: e.g., by directly pushing on the lever arm 106A as just described and repositioning (pushing) the entire dervice 102 or by repositioning (pushing) the entire device 102 (without pushing on the lever arm) in the +y direction against the beam 103 such that the beam 103 is made to enter the cradle area 112 pushing or pressing against the lever body 106B, thereby causing the lever arm 106A to rotate upward (i.e., in a direction away from the cradle surface 104B) as a result of contact between the beam 103 and the surface 110. The optional presence of the spring 108 facilitates forcing the movement of the lever arm 106A to appropriately engage the surface 110 with the beam 103 and pushing surfaces 104A and 104B securely against the beam 103. At this point, the beam 103 is secured with the coupling device 102 (in the cradle space or area 112).

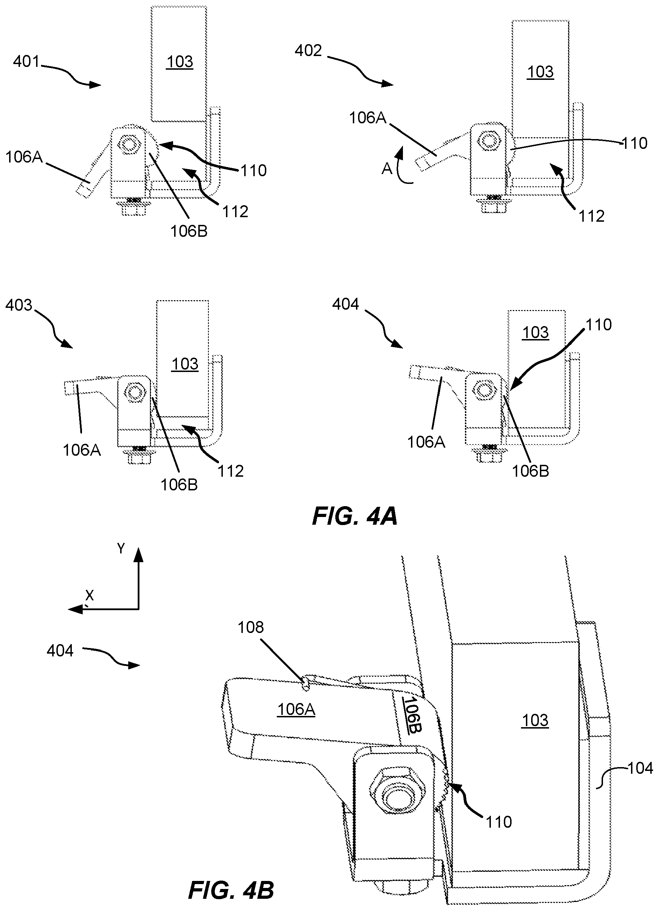

To this end, FIG. 4A provides additional illustration to the process of engaging the beam 103 with the coupling device 102 and mutual orientations (401, 402, 403, and 404) of the components of the device 102 at four different moments of time during this engagement process. The local system of Cartesian coordinates (x,y,z) is the same as shown for each of the mutual orientations (401, 402, 403, 404). The beam 103 of interest is extended along a lateral direction of the cradle space 112 - that is, along the z-axis (or, horizontally in this case).

Here, at moment of time t1 (corresponding to step 401 of the sequence of engaging the beam 103), the cradle 112 is in the "closed" position due to the spring 108 biasing the lever arm 106A downward. (It will be understood that not all of related embodiments are necessarily equipped with the spring 108, as mentioned above. In embodiments devoid of the spring 108 that is configured to bias the lever arm 106A, the lever arm 106A may be biased downward by a mechanical torque caused by gravity acting on the lever arm 106A, or simply moved in that position by the user.)

Due to the arrangement of the lever device 106 (with the surface 110 of the lever body 106B forming part of the cradle space 112) and the non-zero curvature of the surface 110, the narrowest part of the cradle space 112 is dimensioned to be not as wide as the beam 103 at the narrowest point of the beam.

At the moment of time t2 > t1 (corresponding to step 402 of the process), the beam 103 is at the initial stage of contacting the surface 110 of the lever device 106 and at the "entrance" of the cradle space 112. As the beam 103 is brought into contact with the lever device 106 and is pushed into the cradle space 112 (or, alternatively, the coupling device is pushed onto the beam 103), the lever device 106 experiences a surface contact force (via contact between the beam 103 and the lever body 106B), which force tends to rotate the lever arm 106A upward. (In some embodiments, this process is aided by serrations or surface relief on the contact surface 110.) Due to the curvature of the lever body 106B, the cradle 112 begins to "open" (i.e., become wider) as the lever arm 106A rotates or is rotated upward (shown by the arrow A).

At step 403 (corresponding to the moment of time t3 > t2), the beam 103 pushes (or is pushed) further into the cradle space 112, with the lever arm 106A continuing to rotate upward, further opening the cradle.

At step 404 (t4 > t3) the cradle 112 has been opened to substantially fully receive the beam 103, which at this time - and depending on the specific dimensions - may be made to rest against the contact surface 110 and the other two contact surfaces forming the cradle 104. (It can be seen that, in such optional case, substantially all of the cradle space 112 is now filled with the beam 103.) The mutual orientation and coordination between the beam 103 and the coupling device 102 shown at step 404 in Fig. 4A is similar to the arrangement expected to occur if a worker were to push the coupling device 102 against the beam 103 while continuing to hold the coupling device 102 in place against gravity and, in embodiments where the lever device 106 includes a spring 108, against the biasing force of the spring 108. Fig. 4B shows a perspective view of the coupling device 102 in the spatial coordination with the now embraced-by-the-coupling-device beam 103, as in step 404 of Fig. 4A.

It will be appreciated that the lever arm 106A tends to rotate downward generally if no counteracting force is applied to it. Due to the non-zero spatial curvature of the contact surface 110 (and optionally aided in some embodiments by serrations on the contact surface 110), this downward rotation of the lever arm 106A may cause tightening of the grip of the coupling device 102 on the beam 103. It should be appreciated that these structural features of the coupling device 102 allow the coupling device 102 to, substantially, "self-tighten" the grip onto the beam 103 and that slippage of the coupling device 102 away from the beam 103 due to gravity or other forces (tending to pull the coupling device 102 away from the beam 103) causes the increase or strengthening of the grip of the coupling device 102 on the beam 103.

### Related Embodiments of the Coupling Sub-System of the Anchoring Apparatus

In further reference to FIGs. 1C, 4A, 4B - in some applications the coupling device 102 may be required to be fastened to a nearly-vertically-oriented beam 103 (that is, the longitudinal extent of the beam 103 is considered to be along the z-axis of Fig. 4A, along the vector of gravity), in which case "slippage" of the coupling device 102 as described above in connection to Figs. 4A, 4B would result in the coupling device 102 sliding downward (along the vector of gravity) rather than self-tightening on the beam 103. FIGs. 4C and 4D show related variants of the coupling device 102 in embodiments that are non-mutually-exclusive with respect to the embodiments of FIGs. 1C, 4A, and 4B, for example. These variants are non-limiting examples of variations tailored for an application when the coupling device has to be attached to the substantially vertically-positioned beam 103 (which, in the case of FIGs. 4C, 4D is emphasized by the local system of coordinates in which the z-axis (corresponding to the extension of the nearly-vertically-positioned beam 103) is appropriately indicated along the channel formed by the space 112.

Here, the embodiment 410 of the coupling device of the anchoring apparatus 100 includes a spring 412 (shown as a coil spring in this example) disposed in the middle of the bottom surface 104B of the cradle element 104. When the embodiment 410 is being fastened to the substantially vertically-oriented beam 103, the spring 412 is compressed against the body of the beam 103 and applies a counter-(contact) force to the beam 103, which in turn creates a force against the lever body 106B such as to induce the lever arm 106A to rotate "downward" (locally, along the y-axis), thereby causing the coupling device embodiment 410 to self-tighten once closed about the beam 103 and regardless of the precise orientation of the embodiment 410 with respect to the vector of gravity.

Phrased differently, at least one of the optional constituent components of the coupling device may be appropriately dimensioned to ensure that - when a force is applied to the combination of the coupling device and the beam at least already partially-grasped-by-the-coupling-device that tends to separate the coupling device from the respective beam - a set of contact forces (between the elements of the coupling device forming or present the cradle space and the beam acting to maintain the coupling device in contact with the beam) remains at least not reduced or even increased. Such optional component may include a spring within a recess present in the cradle space and generally compressed when the beam is cradled in the cradle space, thereby increasing the set of contact forces between the cradle and the respective beam.

FIG. 4D illustrates yet another not-mutually-exclusive related embodiment 420 of the coupling device of the anchoring apparatus. As shown, FIG. 4D omits the spring 108. In this embodiment 420, the lever arm 106A is shown to be substantially elongated and longer as compared to that of the previously discussed embodiment(s), thereby providing both a greater distance between the free end of the lever arm 106A and the fulcrum near the lever body 106B, as well as added mass. These structural features are intentionally chosen to provide a sufficient force to bias the lever arm 106A downward (along the arrow 422) due to the influence of gravity, by analogy to the function of the spring 108 present in other implementations, when the coupling device is substantially right-side up.

In certain specific implementations, the device 102 can be dimensioned such that, the weight of the lever arm by itself (in absence of the torsion spring 108) maintains the surface area 110 of the lever body 106B firmly pressed against the auxiliary element 103 as if the torsion spring 108 were attached to the coupling device.

### Related Embodiments of the Anchoring Apparatus.

FIG. 2A shows a related - and non-exclusive from and compatible with that of FIG. 1C embodiment 200 of the anchoring apparatus of the invention. The embodiment 200 includes a multiplicity of the coupling devices and is particularly suited to support larger/ heavier objects and/or allowing the coupling devices to span over a greater surface of the beams, so the embodiment 200 as a whole has a stronger grip on the beam(s) 103. The pictured embodiment includes four coupling devices 102 organized in pairs (the first pair including devices 102(1) and 102(2)) on each of the two ends of the anchoring apparatus 200. The plate 120 of device 200 is shown to have two differently-dimensioned slots on each end of the plate 120: a slot 202 having a certain width, and a slot 204 the width of which is narrower than the width of the slot 202 (for convenience, these slots will be referred to as a "wide slot" 202 a "narrow slot" 204). In a specific case, one wide slot 202 and one narrow slot 204 may run the length of the plate 120. These slots are judiciously dimensioned to allow the plate 120 to be attached to the coupling devices 102 after the coupling devices 102 have been already securely coupled to the beam(s) 103. One of each of the slots 202 and 204 are shown in greater detail in FIG. 2B, which also illustrates the anchoring apparatus 200 in use, with the beam 103 that has been already grasped and held by the multiple coupling devices 102. The presence of the wide slot 202 allows the user to coarsely position the plate 120 under the coupling devices 102. Suitable mechanical features on the underside of the coupling devices 102 (illustrated in FIG. 3A, for example) allow the user to suspend the plate 120 temporarily until the plate 120 can be secured to all the coupling devices 102 of the embodiment 200.

Referring again to FIG. 3A, a pair of coupling devices 102 - 102(1) and 102(2) - is shown for use in embodiment 200. As has been already alluded to, the device 102(1) is illustrated with the peg 302 appropriately dimensioned to pass through the wide slot 202 of the plate 120 of FIGs. 2A and 2B, while the other coupling device 102(2) is depicted with the thumbscrew 304, the shaft of which is dimensioned to pass through the narrow slot(s) 204 of the plate 120. The peg 302 is configured to have a head that is significantly wider than its shaft but narrower than the width of the wide slot(s) 202. Such spatial coordination of the structural components allows the user to position the mounting plate 120 under a set of coupling devices 102 (that have been already affixed to the overhanging beam 103) while passing the pegs belonging to the coupling devices 102(1) through the wide slot(s) 202. Because the head of each peg 302 is significantly wider than its shaft, the plate 120 can be translated along the plane of the plate 102 such that the wide slots (or slot) 202 are off-center relative to the shafts of the pegs 302, thereby causing or allowing the mounting plate 120 to be partially suspended from the peg heads.

At the same time, the mounting plate 120 and slots 204 may be dimensioned such that, when arranged as described above relative to the pegs 302, the narrow slots (or slot) 204 in the plate 120 are aligned with the other coupling device 102(2). At this point, the plate 120 may be solidly, firmly attached to all present coupling device(s) 102 by passing one or more threaded fasteners (e.g., a bolt or the thumbscrew 304) through the narrow slots (or slot) 204 and threading the fasteners (or fastener) into a threaded hole (or holes) in one (or more) of the present coupling device(s) 102.

Notably, as shown in FIG. 3A, a typical lever device 106 may generally include, regardless of a particular implementation of the anchoring device, a U-shaped bracket shown as 306. The bracket 306 is dimensioned to support the lever body 106B therein in a hinged fashion and to provide an axis of rotation 308 for the lever body. Depending on the specifics of a particular implementation, this bracket 306 may be configured to be a structural extension of the lower wing of the element 104 (as shown in FIG. 3A) or, alternatively, be a stand-alone component that is attached to the portion of the element 104 that forms a bottom of the cradle space 112.

In further reference to FIGs. 2A, 2B, it will be readily appreciated by a skilled artisan that the particular arrangement of paired coupling devices 102 (that is, the use of one coupling device 102(1) and one coupling device 102(2)) and slots in a plate such as plate 120 confers clear operational advantages on the process of use of the embodiment of the invention. In particular, modifiable and adjustable positioning of the multiple coupling devices 102 on the supporting plate 120 (ensured by the presence of the respective slots 202, 204) causes the corresponding anchoring apparatus (see 200 in FIG. 2A, as an example) to be reconfigurable such as to accommodate a set of multiple beams 103 with various spacings between or among the individual beams. Understandably, depending on the mutual orientation of the multiple coupling devices in a particular version of the anchoring apparatus, the anchoring apparatus can be dimensioned to accommodate beams 103 that are not parallel to each other - for example, by adjusting the angle(s) between the coupling devices 102(1) and 102(2) in each pair of coupling devices present in a given embodiment of the anchoring apparatus.

FIG. 5A illustrates a perspective view, in the indicated local coordinate system, the embodiment 200 in use together with the arrangement of the coupling devices 102(1) and 102(2), as discussed above. In particular, FIG. 5A shows the pegs 302 of the coupling devices 102(1), which pegs pass through two wide respectively-corresponding slots 202 to partially support the plate 120 at the coupling devices, and the extension member 122 attached to the plate 120 described previously. Also visible is the auxiliary angled member 125.

FIG. 5B shows the opposite side (or front) of the embodiment 200, also in perspective view, this time - coupled to a pair of beams 103 (located under the roof of the building). Clearly visible in FIG. 5B are now the narrow slots 204, which are not visible in FIG. 5A. Similarly, FIG. 5B shows the thumbscrews 304 and hinge 124, which are not visible in FIG. 5A. For purposes of illustration only, the coupling devices 102(1), 102(2) are depicted in FIGs. 5A and 5B with the lever arms 106A rotated upward rather than in an orientation described in reference to FIG. 4A.

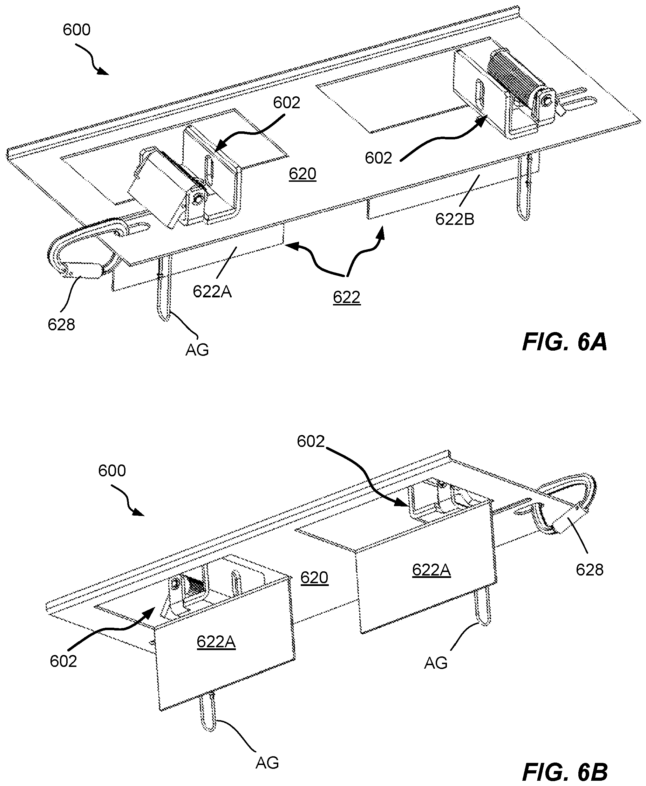

FIGs. 6A and 6B are top and bottom perspective views of yet another related embodiment 600 of the anchoring apparatus of the invention. The embodiment 600 features two coupling devices, each dimensioned to be substantially larger that the coupling device 102 of the embodiment 200. Additionally, the extension member 622 is modified (in comparison with the extension member 122) in that it includes two segments 622A, 622B, each of which is inseparably and fixatedly (without the ability to substantially change its spatial orientation) integrated into the mounting surface of the corresponding mounting plate 620 as shown, thereby reducing weight and lowering manufacturing costs of the overall embodiment 600. It can be observed that such arrangement may be achieved, at least in part, by defining the two portions 622A, 622B of the extension member 622 to be formed from corresponding areas of the plate 620 itself - that is, by partially cutting-out the corresponding portions of the plate 620 and turning or folding these portions transversely to the plane of the plate 620, thereby forming (substantially right) dihedral angles between the portions 622A, 622B and the main plane (the xz-plane, in the local coordinates as shown) of the plate 620 with which these portions 622A, 622B are integral. Such configuration results in formation of the opening(s) in the main plane of the plate 620, which openings may be dimensioned to be substantially congruent with the portions 622A, 622B. Notably, rather than having two slots with two different affixation designs on each side (by analogy with the supporting plate 120 of the embodiment 200 as shown in FIGs. 5A and 5B), the embodiment 600 may be configured to contain only one slot and one affixation design per side of the support plate 620. The embodiment 600 may be configured to contain such slots to effectuate the mutual repositioning between the plate 602 and the coupling device(s) 602 to which it is repositionably / movably attached until the appropriate affixation member (such as the wing-nut element at the lower portion of the affixation member of the embodiment 420, or the element 304 of FIG. 300) is tightened to form a stationary unit of the coupling device(s) 602 and the plate 620.

### Examples of Use of an Embodiment of an Anchoring Device as a Temporary Soffit or Combined Soffit and Wall.

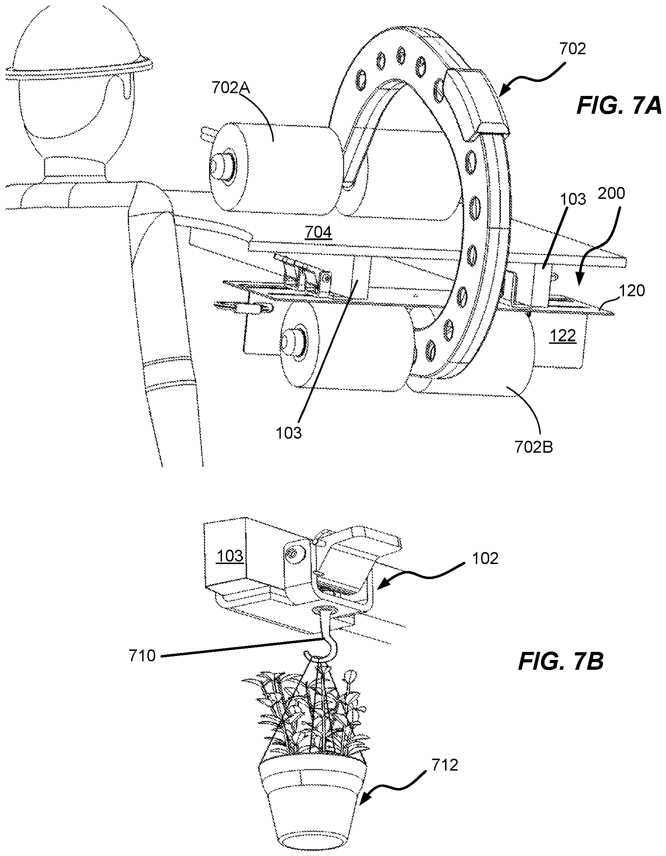

Embodiments of the invention can be practically used in various applications and, in particular, for use as an apparatus configured to attach an auxiliary system to a beam. To this end, FIG. 7A provides an illustration to one example of such use. Here, the embodiment 200 is shown used in conjunction with an "eave hook" device 702 previously patented by the Applicant and described in, for example, US 8,292,030 and the US patent application No. 16/876,674, the disclosure of each of which is incorporated by reference herein. The device is marketed as the Eveook^{™}.

As described, for example, in reference to FIGs. 1 and 2 of US 16/876,674, the device or anchor 702 has at least four wheels arranged in two pairs 702A, 702B on respectively-corresponding axles that are interconnected with one another through an arched body 704 that extends continuously from the axle with one pair of wheels 702A to the axle with another pair of wheels 702B, thereby forming an open hook used for engaging a roof projection. At at least one of its ends, the body 704 is connected to a tether (optionally - via a connector 150 identified, for example, in FIG. 1 of US 16/876,674. The Eveook^{™} device 702 is a roof-anchoring device that allows roof workers to quickly install safety lines on the roofs. As disclosed in U.S. Patent 8,292,030 and, specifically, in US 16/876, a pair of Eveook^{™} devices can be used to anchor a safety line through tensioning the safety line between the two Eveooks, with the Eveooks attached to the roof edges on each side of the building, with a set of wheels on one side of each Eveook pressing against the roof and the other set of wheels on each Eveook pressing against the soffit. In particular, as discussed in US 16/876,674, a method for forming a secure attachment to a roof of a building with the use of a pair of devices 702 may include: (a) positioning a first wheeled roof-anchoring device 702 near a first edge of the roof such that a first set of wheels with a corresponding first axle are located under and in a first tensioned contact with the first edge while a1) a second set of wheels with a corresponding second axle are in contact with and on the roof, and a2) a first connector pivotally attached to the second axle is under tension due to a first force pulling said first connector away from at least one of the first and second axles along the roof. Here, the first roof-anchoring device includes a first arched body having first and second ends, the first axle with the first set of wheels juxtaposed with the first arched body at the first end, the second axle with the second set of wheels juxtaposed with the first arched body at the second end, and the first connector. The method additionally includes (b) disposing a second wheeled roof-anchoring device 702 near a second edge of the roof such that a third set of wheels with a corresponding third axle are located under and in a second tensioned contact with the second edge while b1) a fourth set of wheels with a corresponding fourth axle are in contact with and on the roof, and b2) a second connector pivotally attached to the fourth axle is under tension due to a second force pulling the second connector away from the fourth axle along the roof. Here, the second roof-anchoring device includes a second arched body having third and fourth ends, the third axle with the third set of wheels juxtaposed with the second arched body at the third end, the fourth axle with the fourth set of wheels juxtaposed with the second arched body at the fourth end, and the second connector. The first and second connectors are linked with a tether line or lines under strain sufficient to maintain the first and second tensioned contacts while preventing the first and third sets of wheels from moving relative to first and second edges of the roof. The process of disposing the second device may include disposing the second device near the second edge that is opposite to the first edge. In one specific implementation of the method, at least one of the operations of positioning and disposing includes at least one of the following: (i) locating a chosen roof-anchoring device, from the first and second roof-anchoring devices structured as device 702, on the roof such that all wheels of this chosen device are in contact with the roof; and causing the chosen device to wheel to a corresponding edge of the roof, from the first and second edges of the roof, with the connector facing away from the roof edge, at least until the first set of wheels of such chosen roof-anchoring device closest to the corresponding edge loses contact with the roof, but leaving the second set of wheels on the roof; (ii) positioning the chosen roof-anchoring device with an axle to which a corresponding connectoris attached and positioned above the corresponding edge of the roof while a set of wheels on an axle opposite to the corresponding connector is under and in contact with an edge of the roof; and (iii) pivoting at least one of the first and second connectors at two locations with respect to a corresponding axle.

However, as a skilled artisan will readily appreciate, in order to function properly the Eveook^{™} system containing a pair of devices 702 requires the presence of a soffit or similar structure, which not all buildings have. To address this deficiency of operation, the use of a presently-discussed anchoring system (such as system 100, 200, 600 for example) provides substantial operational advantages. To this end, as shown in FIG. 7A, a position of a given device 702 is adjusted along the roof 708 (as discussed in US 16/876,674) until the upper pair of wheels 702A of the device 702 is rested on the surface of the roof, while the lower pair of wheels 702B of the system 702 is in contact with and against the support plate 120 and the extension member 122 of the anchoring apparatus 200 (that has been already fittingly affixed to the beams 103 under the roof 704 with the use of the multiplicity of the coupling devices 102). Here, the support plate 120 and the extension member 122 is used, therefore, to provide a reliable stopper and support for the rear (lower) pair of wheels 702B, thereby preventing the device 702 from rolling further up the roof 708 as long as the wheels 702A remain in contact with the surface 704 and the tether is tensionally affixed to another device 702, disposed in a similar cooperation with another anchoring apparatus 200 at another edge of the roof of the building. (A clear advantage provided by the presence of the elements 120, 122 in an embodiment of the present invention are clearly understood by considering that in many cases, without the extension member 122 attached to the support plate 120, the anchoring device could further roll up the roof until the arched body of the anchoring device makes contact, with pressure, against the roof edge, thereby transferring the force - that would otherwise be at the contact of the wheels with the support plate and the extension plate 122 - to the roof edge, and likely damaging the roof edge. At the same time, if the rafter tails are short enough, an extension plate 122 may not be required since the lower wheels are in this case positioned substantially against the wall; in this case, the use of the embodiment 100 with the Eveook anchoring device(s) may be preferred.)

Referring again to the illustration of FIG. 7A, embodiments of the present invention, such as those shown in FIGs. 1B, 2A, 2B, and 5A, 5B may be cooperated with the structural elements 708, 103 to provide the underside of the roof, that is a temporary soffit/wall structure. The side of the anchoring system 200 facing the wall of the building may be structured similarly to that shown in FIG. 5A. The side of the device 200 facing away from the wall, which is operably coupled to the Eveook^{™} as shown in FIG. 7A, may be structured similarly to that shown in FIG. 5B. The process of affixation of the anchoring apparatus (200, in this example) to the beams 103 and/or assembly of the anchoring apparatus of the invention to the beams 103 is carried out in a sequential fashion, for example as follows. In operation, a worker attaches a coupling device 102 or a multiplicity of coupling devices 102 to a rafter beam 103 on the exterior of a building. Next, the worker attaches yet another coupling device 102 (or another multiplicity of coupling devices 102), to an adjacent rafter beam 103. Then, the mounting plate 120 is fastened to the installed-to-the beams coupling devices 102 with the use of the fasteners (such as bolts) of the coupling devices (see FIG. 1C for an example). The plate 120 may have the extension member 122 already connected to it, or - in case the plate 120 is initially devoid of any extension member or when an extension member 122 is not engaged with the supporting plate - the worker may attach or engage the extension member 122 to the plate 120 (as discussed, for example, in reference to FIG. 3B). Here, in one implementation, the extension 122 may be connected/engaged to the mounting surface of the plate 120 with a hinge 124, thereby allowing the extension member 122 to be closed or folded alongside of the mounting plate, to be stowed for easy carrying. In this case, the worker can easily carry the closed plate 120 to the top of a ladder and then deploy the vertical attachment 122 for installation of the mounting plate 120. Furthermore, in many instances, if the rafter beam is substantially short, an extension plate 122 may not be used at all (as in the case of embodiment 100 of FIG. 1A)

By analogy with using the anchoring device 702 with the embodiment 200 of the anchoring system of the invention shown in FIG. 7A, the anchoring device can be employed in cooperation with the embodiment 600 instead. The embodiment 600, in this case, may be cooperated with the structural elements 708, 103 to provide the underside appendage to the roof as a temporary soffit structure configured to receive an Eveook^{™} anchoring device 702. In this case, the side of the anchoring system 600 that is attached to the coupling devices 602 is disposed closer to the roof edge and farther from the wall of the building. The side of the device 600 facing away from the wall may be operably coupled to the Eveook^{™} similar to the situation illustrated in FIG. 7A. The process of affixation of the embodiment 600 and/or related assemblies to the beams 103 may be carried out in a fashion similar to that described above, however it may be more efficient to attach the coupling devices to the support plate 620 prior to attaching the coupling devices 602 to the rafter beams 103. An example of the procedure can be briefly described as follows. A user or installer attaches the two coupling devices centered on the support plate, with these coupling devices attached at such a distance from each other that is similar to the distance between the rafter beams. In doing so, one of the coupling devices is attached firmly to the supporting plate, while the other of the coupling device is attached loosely enough to be slidable or moveable along to the supporting plate. The installer may then attach a rope or cord to the connector hole (on the side of the supporting plate) with a connecting device such as a carabiner, or even attach the rope directly to the connector hole. The installer may climb the ladder, carrying the opposite side of the rope from the embodiment 600. Just below the roof edge, the installer may pull the embodiment 600 up to the installer with the rope. The installer may then take the embodiment and attach the first coupling device, that is already tightly connected to the supporting plate, and attach it to a rafter beam 103. The installer may then adjust the distance from the first coupling device to the second coupling device so that it is equal to the distance between the rafter beams 103 and then attach the second coupling device to the rafter beam and then firmly tighten the second coupling device to the supporting plate.

In certain other applications, only a single coupling device 102 (and not a complete anchoring apparatus) may be required for practical use of the embodiment of the invention. FIG. 7B provides a schematic illustration of one such application, where a single coupling device 102 structured in a fashion similar to that of the embodiment of FIG. 4D is used to carry a hook 710, which in turn is used to hang/support a pot 712 holding a houseplant.

Overall, a person of skill in the art will readily appreciate that the discussed embodiment provide an anchoring system that is configured to nondestructively anchor to a beam (thereby provide a holding point for a chosen object at such beam). The anchoring system includes at least one coupling device the components of which are disposed to define a generally U-shaped cradle space, a lever device being one of these components and having a lever arm and a lever body, wall and bottom of such coupling device being two more of these components. Such coupling device is configured to grasp (upon an application of force to the lever device tending to rotate the lever arm upward and away from the bottom) the beam about three sides of that beam from beneath the beam, the three sides including a bottom side of the beam and two mutually parallel sides of the beam that are transverse to the bottom side. The coupling element may be equipped with a fastener element attached to the bottom of the coupling device such as to provide at least one point of support for the chosen object. The chosen object may include a target object to be hung at the anchoring system or an additional component of the anchoring system such as a supporting plate having a mounting surface and coupled to an underside of the anchoring system (with the use of slot(s) formed through the supporting element, when the fastener element is pulled or passed through such slot(s)). In the process of grasping the beam as a result of the application of force, the coupling device has at least two areas of contact with the sides of that beam: (1) a first contact area having a substantially flat surface (corresponding to a wall of the coupling device that may be optionally complemented with a compressible material) and (2) a second contact area at a curved portion of the lever body and substantially opposite the first contact area. In operation of the anchoring system, and depending on the orientation of the beam in space, the application of force to the lever device (which force tends to rotate the lever arm downward, towards the bottom) may at least in part be provided by a torque caused by a downward force of gravity acting upon the lever arm. In particular, the coupling device may configured such that the typical such downward torque is sufficient to cause the coupling device to remain in a closed state (in the absence of at least one additional force applied to the lever device). Alternatively or in addition, the coupling device may be configured such that the application of force to the lever device (which force tends to rotate the lever arm downward, towards the bottom) is provided at least in part by a spring element disposed to hold the lever arm in a position that causes the coupling device to remain in a closed state (when no additional force is applied to the lever arm in opposition to the force provided by the spring element).

It should be understood, that the embodiments herein may be fabricated in various sizes and with various arrangement of coupling devices as required for a particular application. As an example, embodiments configured to couple to three or more beams are envisioned, to enable supporting extended objects or objects that are too large or heavy to be supported by a single anchoring point and /or in areas where hanging or supporting objects might otherwise be difficult. Related embodiments may be designed to accommodate beams which are not parallel to each other. A given anchoring apparatus (such as that in example of embodiments 100, 200, 600) and any components disclosed herein may be fabricated or formed in a variety of ways and from a variety of materials, with constituent components of such anchoring apparatus being machined, molded or otherwise fabricated from high strength materials such as steel, aluminum alloy, reinforced aluminum, tubular alloy, high-strength plastics or wood, or be manufactured from a combination of any suitable materials and processes. The choice of materials and construction are clearly within the scope of the appended claims.

References made throughout this specification to "one embodiment," "an embodiment," "a related embodiment," or similar language mean that a particular feature, structure, or characteristic described in connection with the referred to "embodiment" is included in at least one embodiment of the present invention. Thus, appearances of these phrases and terms may, but do not necessarily, refer to the same implementation. It is to be understood that no portion of disclosure, taken on its own and in possible connection with a figure, is intended to provide a complete description of all features of the invention.

It is also to be understood that no single drawing is intended to support a complete description of all features of the invention. In other words, a given drawing is generally descriptive of only some, and generally not all, features of the invention. A given drawing and an associated portion of the disclosure containing a description referencing such drawing do not, generally, contain all elements of a particular view or all features that can be presented is this view, for purposes of simplifying the given drawing and discussion, and to direct the discussion to particular elements that are featured in this drawing. A skilled artisan will recognize that the invention may possibly be practiced without one or more of the specific features, elements, components, structures, details, or characteristics, or with the use of other methods, components, materials, and so forth. Therefore, although a particular detail of an embodiment of the invention may not be necessarily shown in each and every drawing describing such embodiment, the presence of this detail in the drawing may be implied unless the context of the description requires otherwise. In other instances, well known structures, details, materials, or operations may be not shown in a given drawing or described in detail to avoid obscuring aspects of an embodiment of the invention that are being discussed.

While the description of the invention is presented through the above examples of embodiments, those of ordinary skill in the art understand that modifications to, and variations of, the illustrated embodiments may be made without departing from the inventive concepts disclosed herein. The invention should not be viewed as being limited to the disclosed examples.

The foregoing description and accompanying drawings illustrate principles, preferred embodiments and modes of operation of the invention. However, the invention should not be construed as being limited to the particular embodiments discussed above. Additional variations of the embodiments discussed above will be appreciated by those skilled in the art.

## Claims

1. An anchoring system (100, 200, 600) configured to be attached to a fixed structural component comprising a beam (103) or rafter tail having an upper surface, two vertical side surfaces and a bottom surface, the anchoring system (100) comprising:
a coupling device (102) comprising:
a first plate (104, 104A) and a second plate (104, 104B) that form a dihedral angle therebetween;
a bracket (306) affixed to the second plate (104, 104B);
an axial member (308) supported by the bracket (306); and
a lever (106) having a lever arm (106A) and a lever body (106B) attached to the lever arm (106A), the lever body (106B) rotatably resting on the axial member (308) that is configured as a pivot for the lever (106), the lever arm (106A) facing away from the first plate (104, 104A), the lever body (106B) having a curved surface (110) facing the first plate (104, 104A);
wherein the first plate (104, 104A), the second plate (104, 104B) and the lever (106) together form a cradle space (112) therebetween;
wherein pivoting of the lever (106) about the axial member (308) allows the curved surface (110) to move within the cradle space (112) between a closed position and an open position, thereby allowing at least partial insertion of the beam (103) or rafter tail into the cradle space (112) and engagement between the curved surface (110) and one of the vertical side surfaces and between the first plate (104, 104A) and the other of the vertical side surfaces to attach the coupling device (102) to the beam (103) or rafter tail around the bottom surface and at least partially around the two vertical side surfaces;
and
an affixation member (134, 302, 304) cooperated with the second plate (104, 104B) and extending below the second plate (104, 104B) or the bracket (306).

2. The anchoring system (100, 200, 600) according to claim 1, further comprising at least one of the following:
a) the anchoring system further comprises a coil spring (412) disposed on the second plate (104, 104B) in the cradle space (112);
b) the anchoring system further comprises a torsion spring (108) cooperated with the lever arm (106A) to bias the lever arm towards the second plate (104. 104B);
c) wherein the curved surface (110) of the lever body (106B) is serrated; and/or
d) wherein the first and second plates are wings of a single angled member (104).

3. The anchoring system (100, 200, 600) according to one of claims 1 and 2, wherein the affixation member (134, 302, 304) comprises a fastener having a shaft, the anchoring system (100, 200,600) further comprising a supporting plate (120) disposed below and parallel to the second plate (104, 104B), the supporting plate (120) having a slot (202, 204) therein; and
wherein the shaft is configured to pass through the slot (202, 204) and to freely move along the slot until the fastener (134, 302, 304) is tightened at a desired first point to form a stationary unit of the supporting plate (120) with the coupling device (102).

4. The anchoring system (100, 200, 600) according to claim 3, further comprising an auxiliary coupling device (102) having the same structure as the coupling device (102), wherein the auxiliary coupling device is disposed next to the coupling device or at a second point of the supporting plate (120).

5. The anchoring system (100, 200, 600) according to claim 3 or claim 4, further comprising:
an extension plate (122, 622, 622A, 622B) disposed below the supporting plate (120), wherein the extension plate is
(a) a fixed extension plate (622, 622A, 622B) formed by a cut portion of the supporting plate (120) and fixedly positioned in a plane substantially transverse to a plane of the supporting plate; or
(b) a hinged extension plate (122) attached to the supporting plate (120) on a side thereof that is opposite to the bracket (306), said hinged extension plate (122) configured to be rotatable about a hinge (124) to assume a first closed position in which the hinged extension plate (122) is substantially parallel to the supporting plate (120) and a second open position in which the hinged extension plate (122) is substantially transverse to the supporting plate (120).

6. The anchoring system (100, 200, 600) according to claim 5, wherein the extension plate is the hinged extension plate (122), and at least one of the following:
(a) wherein the anchoring system (100, 200, 600) further comprises an auxiliary angled member (125) having a first wing and a second wing, wherein the first wing is attached to one of the supporting plate (120) or to the hinged extension plate (122) on a side thereof opposite to the hinge (124), and one or more of:
(i) wherein the auxiliary angled member (125) is configured as a stopper and the second wing is configured to cooperate with the other of the hinged extension plate (122) or the supporting plate (120) when the hinged extension plate (122) is in the second open position; or
(ii) wherein the anchoring system (100, 200, 600) further comprises a first magnet (312) and a second magnet (312), the first magnet attached to the second wing of the auxiliary angled member (125) and the second magnet (312) attached to the other of the hinged extension plate (122) or the supporting plate (120) to magnetically interact with the first magnet (312) when the hinged extension plate (122) is in the second open position and to prevent the hinged extension plate (122) from moving towards the first closed position in absence of external force applied to the hinged extension plate (122); or
b) a length of the hinged extension plate (122) is substantially equal to a length of the supporting plate (120).

7. The anchoring system (100, 200, 600) according to one of claims 1, 2, 3, 4, 5, and 6, wherein the anchoring system (100, 200, 600) further comprises one or both of the following:
a) a connecting gear member (AG) that is moveably attached to the affixation member (134, 302, 304) or the supporting plate (120) or the extension plate (122, 622, 622A, 622B), and/or
b) first and second cushions (104A-1, 104B-1) respectively affixed to surfaces of the first and second plates (104A, 104B).

8. The anchoring system (100, 200, 600) according to one of claims 1 or 2, further comprising:
a connecting gear member (AG), the connecting gear member (AG) comprising at least one of a clip, a snap hook, a carabiner, or a member dimensioned as a loop attached to the affixation member (134, 302, 304) substantially irremovably.

9. A method for using the anchoring system (100, 200, 600) according to any one of claims 1 to 8 with the fixed structural component, the method comprising:
positioning the coupling device (102) under the fixed structural component (103) so that the fixed structural component (103) is substantially aligned with the cradle space (112) and the lever (106) is pivoted to position the curved surface (110) of the lever body (106B) in the closed position; and
engaging the fixed structural component (103) with the coupling device (102) by moving the coupling device (102) or the fixed structural component (103) relative to each other such that the fixed structural component (103) enters the cradle space (112) and engages with a portion of the curved surface (110) and with the first plate (104, 104A) within the cradle space (112), wherein the lever (106) is pivoted to move the curved surface (110) toward the open position as the fixed structural component (103) moves closer to the second plate (104, 104B) until the coupling device (102) is substantially locked onto the fixed structural component (103) with the fixed structural component (103) in said cradle space (112) due to forces of interaction between the fixed structural component (103) and at least a portion of the curved surface (110) and the first plate (104, 104A).

10. The method according to claim 9, further comprising
bringing the bottom surface of the fixed structural component (103) in contact with the second plate (104, 104B) or with an element disposed on the second plate.

11. The method according to one of claims 9 and 10, wherein the anchoring system (100, 200, 600) further comprises a supporting plate (120) disposed below and parallel to the second plate (104, 104B), the supporting plate (120) having a slot (202, 204) therein, and wherein the affixation member (134, 302, 304) comprises a fastener having a shaft configured to pass through the slot.
the method further comprising:
moving the supporting plate (120) and the coupling device (102) relative to each other to a desired position of the shaft at a first point in said slot (202, 204), and
tightening the affixation member (134, 302, 304) to form a stationary unit of the supporting plate (120) with the coupling device (102).

12. The method according to claim 11, wherein the anchoring system (100, 200, 600) further comprises an extension plate (122, 622, 622A, 622B), disposed below the supporting plate (120), wherein the extension plate is:
(a) a fixed extension plate (622, 622A, 622B) formed by a cut portion of the supporting plate (120) and fixedly positioned in a plane substantially transverse to a plane of the supporting plate (120), or
(b) a hinged extension plate (122) attached to the supporting plate (120) on a side thereof that is opposite to the coupling device (102), said hinged extension plate (122) configured to be rotatable about a hinge (124) to assume a first closed position in which the hinged extension plate (122) is substantially parallel to the supporting plate (120) and a second open position in which the hinged extension plate (122) is substantially transverse to the supporting plate (120).

13. The method according to claim 12, wherein the anchoring system (100, 200, 600) further comprises an auxiliary angled member (125) having a first wing and a second wing, wherein the first wing is attached to one of the supporting plate (120) or to the hinged extension plate (122) on a side thereof opposite to the hinge (124),
the method further comprising moving the hinged extension plate (122) from the first closed position to the second open position so that the second wing contacts the other of the hinged extension plate (122) or the supporting plate (120).

14. The method according to one of claims 11, 12 and 13, wherein the fixed structural component is a rafter beam (103) under a roof, the method further comprising:
when the hinged extension plate is in the second open position under the roof, performing one of the following:
a) rolling an auxiliary wheeled member (702) along a rooftop (704) until wheels (702B) on one axle of the auxiliary wheeled member (702) are off of the roof (704) and are located under the roof (704) in contact with said hinged extension plate (122) while wheels (702A) from another axle of the wheeled member (702) remain on the roof (704); and
b) placing an auxiliary wheeled member (702) such that wheels (702B) on one axle of the auxiliary wheeled member (702) are located under the roof (704) in contact with said hinged extension plate (122) while wheels (702A) from another axle of the auxiliary wheeled member (702) are on the roof (704).

15. The method according to claim 12 wherein the fixed structural component is a rafter beam (103) under a roof (704), the method further comprising one of the following:
a) rolling an auxiliary wheeled member (702) along a rooftop (704) until wheels (702B) on one axle of the auxiliary wheeled member (702) are off of the roof (704) and are located under the roof in contact with said fixed extension plate (622, 622A, 622B) while wheels (702A) from another axle of the wheeled member (702) remain on the roof (704); and
b) placing an auxiliary wheeled member (702) such that wheels (702B) on one axle of the auxiliary wheeled member (702) are located under the roof (704) in contact with said fixed extension plate (622, 622A, 622B) while wheels (702A) from another axle of the auxiliary wheeled member (702) are on the roof (704).

## Patentansprüche

1. Ein Verankerungssystem (100, 200, 600), das konfiguriert ist, um an einem festen Bauteil, das einen Balken (103) oder Sparrenkopf mit einer oberen Oberfläche, zwei vertikalen Seitenoberflächen und einer unteren Oberfläche beinhaltet, angebracht zu werden, wobei das Verankerungssystem (100) Folgendes beinhaltet:
eine Kopplungsvorrichtung (102), die Folgendes beinhaltet:
eine erste Platte (104, 104A) und eine zweite Platte (104, 104B), die zwischen sich einen Diederwinkel bilden;
einen Bügel (306), der an der zweiten Platte (104, 104B) befestigt ist;
eine Axialkomponente (308), die von dem Bügel (306) getragen wird; und
einen Hebel (106) mit einem Hebelarm (106A) und einem an dem Hebelarm (106A) angebrachten Hebelkörper (106B), wobei der Hebelkörper (106B) drehbar auf der Axialkomponente (308) ruht, die als Schwenkachse für den Hebel (106) konfiguriert ist, wobei der Hebelarm (106A) von der ersten Platte (104, 104A) abgewandt ist, wobei der Hebelkörper (106B) eine gekrümmte Oberfläche (110) aufweist, die der ersten Platte (104, 104A) zugewandt ist;
wobei die erste Platte (104, 104A), die zweite Platte (104, 104B) und der Hebel (106) zusammen zwischen sich einen Aufnahmeraum (112) bilden;
wobei das Schwenken des Hebels (106) um die Axialkomponente (308) ermöglicht, dass sich die gekrümmte Oberfläche (110) innerhalb des Aufnahmeraums (112) zwischen einer geschlossenen Stellung und einer offenen Stellung bewegt, wodurch eine mindestens partielle Einfügung des Balkens (103) oder Sparrenkopfs in den Aufnahmeraum (112) und der Eingriff zwischen der gekrümmten Oberfläche (110) und einer der vertikalen Seitenoberflächen und zwischen der ersten Platte (104, 104A) und der anderen der vertikalen Seitenoberflächen ermöglicht werden, um die Kopplungsvorrichtung (102) um die untere Oberfläche und mindestens partiell um die zwei vertikalen Seitenoberflächen an dem Balken (103) oder Sparrenkopf anzubringen;
und
eine Befestigungskomponente (134, 302, 304), die mit der zweiten Platte (104, 104B) zusammenwirkt und sich unter der zweiten Platte (104, 104B) oder dem Bügel (306) erstreckt.

2. Verankerungssystem (100, 200, 600) gemäß Anspruch 1, das ferner mindestens eines von Folgendem beinhaltet:
a) das Verankerungssystem beinhaltet ferner eine Spiralfeder (412), die auf der zweiten Platte (104, 104B) in dem Aufnahmeraum (112) angeordnet ist;
b) das Verankerungssystem beinhaltet ferner eine Torsionsfeder (108), die mit dem Hebelarm (106A) zusammenwirkt, um den Hebelarm zu der zweiten Platte (104, 104B) hin vorzuspannen;
c) wobei die gekrümmte Oberfläche (110) des Hebelarms (106B) gezackt ist; und/oder
d) wobei die erste und die zweite Platte Flügel einer einzigen abgewinkelten Komponente (104) sind.

3. Verankerungssystem (100, 200, 600) gemäß einem der Ansprüche 1 und 2, wobei die Befestigungskomponente (134, 302, 304) ein Fixiermittel mit einem Schaft beinhaltet, wobei das Verankerungssystem (100, 200, 600) ferner eine Tragplatte (120) beinhaltet, die unter und parallel zu der zweiten Platte (104, 104B) angeordnet ist, wobei die Tragplatte (120) darin einen Schlitz (202, 204) aufweist; und
wobei der Schaft konfiguriert ist, um durch den Schlitz (202, 204) zu gehen und sich entlang des Schlitzes frei zu bewegen, bis das Fixiermittel (134, 302, 304) an einer gewünschten ersten Stelle festgezogen wird, um eine unbewegliche Einheit der Tragplatte (120) mit der Kopplungsvorrichtung (102) zu bilden.

4. Verankerungssystem (100, 200, 600) gemäß Anspruch 3, das ferner eine zusätzliche Kopplungsvorrichtung (102) mit der gleichen Struktur wie die Kopplungsvorrichtung (102) beinhaltet, wobei die zusätzliche Kopplungsvorrichtung neben der Kopplungsvorrichtung oder an einer zweiten Stelle der Tragplatte (120) angeordnet ist.

5. Verankerungssystem (100, 200, 600) gemäß Anspruch 3 oder Anspruch 4, das ferner Folgendes beinhaltet:
eine Verlängerungsplatte (122, 622, 622A, 622B), die unter der Tragplatte (120) angeordnet ist, wobei die Verlängerungsplatte Folgendes ist:
(a) eine feste Verlängerungsplatte (622, 622A, 622B), die durch einen ausgeschnittenen Abschnitt der Tragplatte (120) gebildet und in einer Ebene, die zu einer Ebene der Tragplatte im Wesentlichen quergerichtet ist, fest positioniert ist; oder
(b) eine mit Scharnier versehene Verlängerungsplatte (122), die an der Tragplatte (120) angebracht ist, und zwar an einer Seite davon, die dem Bügel (306) entgegengesetzt ist, wobei die mit Scharnier versehene Verlängerungsplatte (122) konfiguriert ist, um um ein Scharnier (124) drehbar zu sein, um eine erste, geschlossene Stellung einzunehmen, in der die mit Scharnier versehene Verlängerungsplatte (122) zu der Tragplatte (120) im Wesentlichen parallel ist, und eine zweite, offene Stellung einzunehmen, in der die mit Scharnier versehene Verlängerungsplatte (122) zu der Tragplatte (120) im Wesentlichen quergerichtet ist.

6. Verankerungssystem (100, 200, 600) gemäß Anspruch 5, wobei die Verlängerungsplatte die mit Scharnier versehene Verlängerungsplatte (122) ist und mindestens eines von Folgendem gilt:
(a) wobei das Verankerungssystem (100, 200, 600) ferner eine zusätzliche abgewinkelte Komponente (125) beinhaltet, die einen ersten Flügel und einen zweiten Flügel aufweist, wobei der erste Flügel an einer von der Tragplatte (120) oder der mit Scharnier versehenen Verlängerungsplatte (122) auf einer dem Scharnier (124) entgegengesetzten Seite davon angebracht ist und eines oder mehrere von Folgendem gelten:
(i) wobei die zusätzliche abgewinkelte Komponente (125) als ein Anschlag konfiguriert ist und der zweite Flügel konfiguriert ist, um mit der anderen von der mit Scharnier versehenen Verlängerungsplatte (122) oder der Tragplatte (120) zusammenzuwirken, wenn sich die mit Scharnier versehene Verlängerungsplatte (122) in der zweiten, offenen Stellung befindet; oder
(ii) wobei das Verankerungssystem (100, 200, 600) ferner einen ersten Magneten (312) und einen zweiten Magneten (312) beinhaltet, wobei der erste Magnet an dem zweiten Flügel der zusätzlichen abgewinkelten Komponente (125) angebracht ist und der zweite Magnet (312) an der anderen von der mit Scharnier versehenen Verlängerungsplatte (122) oder der Tragplatte (120) angebracht ist, um magnetisch mit dem ersten Magneten (312) zu wechselwirken, wenn sich die mit Scharnier versehene Verlängerungsplatte (122) in der zweiten, offenen Stellung befindet, und um zu verhindern, dass sich die mit Scharnier versehene Verlängerungsplatte (122) in Abwesenheit einer äußeren Kraft, die auf die mit Scharnier versehene Verlängerungsplatte (122) ausgeübt wird, zu der ersten, geschlossenen Stellung hin bewegt; oder
b) eine Länge der mit Scharnier versehenen Verlängerungsplatte (122) im Wesentlichen gleich einer Länge der Tragplatte (120) ist.

7. Verankerungssystem (100, 200, 600) gemäß einem der Ansprüche 1, 2, 3, 4, 5 und 6, wobei das Verankerungssystem (100, 200, 600) ferner mindestens eines oder beide der Folgenden beinhaltet:
a) eine Verbindungseinrichtungskomponente (AG), die bewegbar an der Befestigungskomponente (134, 302, 304) oder der Tragplatte (120) oder der Verlängerungsplatte (122, 622, 622A, 622B) angebracht ist, und/oder
b) ein erstes und ein zweites Polster (104A-1, 104B-1), die jeweils an der Oberfläche der ersten bzw. zweiten Platte (104A, 104B) befestigt sind.

8. Verankerungssystem (100, 200, 600) gemäß einem der Ansprüche 1 oder 2, das ferner Folgendes beinhaltet:
eine Verbindungseinrichtungskomponente (AG), wobei die
Verbindungseinrichtungskomponente (AG) mindestens eines von einer Klammer, einem Hakensprengring, einem Karabinerhaken oder einer Komponente, die als eine im Wesentlichen unlösbar an der Befestigungskomponente (134, 302, 304) angebrachte Schlaufe bemessen ist, beinhaltet.

9. Ein Verfahren zum Verwenden des Verankerungssystems (100, 200, 600) gemäß einem der Ansprüche 1 bis 8 mit dem festen Bauteil, wobei das Verfahren Folgendes beinhaltet:
Positionieren der Kopplungsvorrichtung (102) unter dem festen Bauteil (103), sodass das feste Bauteil (103) im Wesentlichen auf den Aufnahmeraum (112) ausgerichtet ist und der Hebel (106) so geschwenkt ist, dass die gekrümmte Oberfläche (110) des Hebelkörpers (106B) in der geschlossenen Stellung positioniert ist; und
In-Eingriff-Bringen des festen Bauteils (103) mit der Kopplungsvorrichtung (102) durch Bewegen der Kopplungsvorrichtung (102) oder des festen Bauteils (103) relativ zueinander, sodass das feste Bauteil (103) in den Aufnahmeraum (112) eintritt und mit einem Abschnitt der gekrümmten Oberfläche (110) und mit der ersten Platte (104, 104A) innerhalb des Aufnahmeraums (112) in Eingriff gelangt, wobei der Hebel (106) geschwenkt wird, um die gekrümmte Oberfläche (110) zu der offenen Stellung hin zu bewegen, während sich das feste Bauteil (103) näher zu der zweiten Platte (104, 104B) bewegt, bis die Kopplungsvorrichtung (102) aufgrund von Wechselwirkungskräften zwischen dem festen Bauteil (103) und mindestens einem Abschnitt der gekrümmten Oberfläche (110) und der ersten Platte (104, 104A) im Wesentlichen an dem festen Bauteil (103) arretiert ist, wobei sich das feste Bauteil (103) in dem Aufnahmeraum (112) befindet.

10. Verfahren gemäß Anspruch 9, das ferner Folgendes beinhaltet:
In-Berührung-Bringen der unteren Oberfläche des festen Bauteils (103) mit der zweiten Platte (104, 104B) oder mit einem auf der zweiten Platte angeordneten Element.

11. Verfahren gemäß einem der Ansprüche 9 und 10, wobei das Verankerungssystem (100, 200, 600) ferner eine Tragplatte (120) beinhaltet, die unter und parallel zu der zweiten Platte (104, 104B) angeordnet ist, wobei die Tragplatte (120) darin einen Schlitz (202, 204) aufweist und wobei die Befestigungskomponente (134, 302, 304) ein Fixiermittel mit einem Schaft beinhaltet, der konfiguriert ist, um durch den Schlitz zu gehen,
wobei das Verfahren ferner Folgendes beinhaltet:
Bewegen der Tragplatte (120) und der Kopplungsvorrichtung (102) relativ zueinander zu einer gewünschten Stellung des Schafts an einer ersten Stelle in dem Schlitz (202, 204) und
Festziehen der Befestigungskomponente (134, 302, 304), um eine unbewegliche Einheit der Tragplatte (120) mit der Kopplungsvorrichtung (102) zu bilden.

12. Verfahren gemäß Anspruch 11, wobei das Verankerungssystem (100, 200, 600) ferner eine Verlängerungsplatte (122, 622, 622A, 622B) beinhaltet, die unter der Tragplatte (120) angeordnet ist, wobei die Verlängerungsplatte Folgendes ist:
(a) eine feste Verlängerungsplatte (622, 622A, 622B), die durch einen ausgeschnittenen Abschnitt der Tragplatte (120) gebildet und in einer Ebene, die zu einer Ebene der Tragplatte (120) im Wesentlichen quergerichtet ist, fest positioniert ist; oder
(b) eine mit Scharnier versehene Verlängerungsplatte (122), die an der Tragplatte (120) angebracht ist, und zwar an einer Seite davon, die der Kopplungsvorrichtung (102) entgegengesetzt ist, wobei die mit Scharnier versehene Verlängerungsplatte (122) konfiguriert ist, um um ein Scharnier (124) drehbar zu sein, um eine erste, geschlossene Stellung einzunehmen, in der die mit Scharnier versehene Verlängerungsplatte (122) zu der Tragplatte (120) im Wesentlichen parallel ist, und eine zweite, offene Stellung einzunehmen, in der die mit Scharnier versehene Verlängerungsplatte (122) zu der Tragplatte (120) im Wesentlichen quergerichtet ist.

13. Verfahren gemäß Anspruch 12, wobei das Verankerungssystem (100, 200, 600) ferner eine zusätzliche abgewinkelte Komponente (125) beinhaltet, die einen ersten Flügel und einen zweiten Flügel aufweist, wobei der erste Flügel an einer von der Tragplatte (120) oder der mit Scharnier versehenen Verlängerungsplatte (122) auf einer dem Scharnier (124) entgegengesetzten Seite davon angebracht ist,
wobei das Verfahren ferner das Bewegen der mit Scharnier versehenen Verlängerungsplatte (122) aus der ersten, geschlossenen Stellung in die zweite, offene Stellung beinhaltet, sodass der zweite Flügel die andere von der mit Scharnier versehenen Verlängerungsplatte (122) oder der Tragplatte (120) berührt.

14. Verfahren gemäß einem der Ansprüche 11, 12 der 13, wobei das feste Bauteil ein Sparrenbalken (103) unter einem Dach ist, wobei das Verfahren ferner Folgendes beinhaltet:
wenn sich die mit Scharnier versehene Verlängerungsplatte unter dem Dach in der zweiten, offenen Stellung befindet, Durchführen von einem von Folgendem:
a) Rollen einer mit Rollen versehenen zusätzlichen Komponente (702) entlang einer Dachoberseite (704), bis Rollen (702B) auf einer Achse der mit Rollen versehenen zusätzlichen Komponente (702) das Dach (704) verlassen haben und sich unter dem Dach (704) in Berührung mit der mit Scharnier versehenen Verlängerungsplatte (122) befinden, während Rollen (702A) von einer anderen Achse der mit Rollen versehenen Komponente (702) auf dem Dach (704) verbleiben; und
b) Platzieren einer mit Rollen versehenen zusätzlichen Komponente (702), sodass sich Rollen (702B) auf einer Achse der mit Rollen versehenen zusätzlichen Komponente (702) unter dem Dach (704) in Berührung mit der mit Scharnier versehenen Verlängerungsplatte (122) befinden, während sich Rollen (702A) von einer anderen Achse der mit Rollen versehenen zusätzlichen Komponente (702) auf dem Dach (704) befinden.

15. Verfahren gemäß Anspruch 12, wobei das feste Bauteil ein Sparrenbalken (103) unter einem Dach (704) ist, wobei das Verfahren ferner eines von Folgendem beinhaltet:
a) Rollen einer mit Rollen versehenen zusätzlichen Komponente (702) entlang einer Dachoberseite (704), bis Rollen (702B) auf einer Achse der mit Rollen versehenen zusätzlichen Komponente (702) das Dach (704) verlassen haben und sich unter dem Dach in Berührung mit der festen Verlängerungsplatte (622, 622A, 622B) befinden, während Rollen (702A) von einer anderen Achse der mit Rollen versehenen Komponente (702) auf dem Dach (704) verbleiben; und
b) Platzieren einer mit Rollen versehenen zusätzlichen Komponente (702), sodass sich Rollen (702B) auf einer Achse der mit Rollen versehenen zusätzlichen Komponente (702) unter dem Dach (704) in Berührung mit der festen Verlängerungsplatte (622, 622A, 622B) befinden, während sich Rollen (702A) von einer anderen Achse der mit Rollen versehenen zusätzlichen Komponente (702) auf dem Dach (704) befinden.

## Revendications

1. Un système d'ancrage (100, 200, 600) configuré pour être attaché à un composant de structure fixe comprenant une poutre (103) ou un prolongement de chevron ayant une surface supérieure, deux surfaces de côté verticales et une surface de dessous, le système d'ancrage (100) comprenant :
un dispositif de couplage (102) comprenant :
une première plaque (104, 104A) et une deuxième plaque (104, 104B) qui forment un angle dièdre entre elles ;
un support (306) fixé à la deuxième plaque (104, 104B) ;
un élément axial (308) soutenu par le support (306) ; et
un levier (106) ayant un bras (106A) de levier et un corps (106B) de levier attaché au bras (106A) de levier, le corps (106B) de levier reposant de façon à pouvoir tourner sur l'élément axial (308) qui est configuré comme un pivot pour le levier (106), le bras (106A) de levier tournant le dos à la première plaque (104, 104A), le corps (106B) de levier ayant une surface courbe (110) faisant face à la première plaque (104, 104A) ;
où la première plaque (104, 104A), la deuxième plaque (104, 104B) et le levier (106) forment ensemble un espace en forme de berceau (112) entre eux ;
où le pivotement du levier (106) autour de l'élément axial (308) permet à la surface courbe (110) de se déplacer au sein de l'espace en forme de berceau (112) entre une position fermée et une position ouverte, permettant de ce fait l'insertion au moins partielle de la poutre (103) ou du prolongement de chevron dans l'espace en forme de berceau (112) et la mise en prise entre la surface courbe (110) et une des surfaces de côté verticales et entre la première plaque (104, 104A) et l'autre des surfaces de côté verticales pour attacher le dispositif de couplage (102) à la poutre (103) ou au prolongement de chevron autour de la surface de dessous et au moins partiellement autour des deux surfaces de côté verticales ;
et
un élément de fixation (134, 302, 304) amené à coopérer avec la deuxième plaque (104, 104B) et s'étendant en dessous de la deuxième plaque (104, 104B) ou du support (306).

2. Le système d'ancrage (100, 200, 600) selon la revendication 1, comprenant en outre au moins un des faits suivants :
a) le système d'ancrage comprend en outre un ressort hélicoïdal (412) disposé sur la deuxième plaque (104, 104B) dans l'espace en forme de berceau (112) ;
b) le système d'ancrage comprend en outre un ressort de torsion (108) amené à coopérer avec le bras (106A) de levier pour solliciter le bras de levier vers la deuxième plaque (104, 104B) ;
c) où la surface courbe (110) du corps (106B) de levier est dentelée ; et/ou bien
d) où les première et deuxième plaques sont des ailettes d'un seul élément angulaire (104).

3. Le système d'ancrage (100, 200, 600) selon l'une des revendications 1 et 2, où l'élément de fixation (134, 302, 304) comprend une pièce d'assujettissement ayant une tige, le système d'ancrage (100, 200, 600) comprenant en outre une plaque de soutien (120) disposée en dessous de la deuxième plaque (104, 104B) et de façon parallèle à celle-ci, la plaque de soutien (120) ayant une fente (202, 204) dans celle-ci ; et
où la tige est configurée pour passer à travers la fente (202, 204) et pour se déplacer librement le long de la fente jusqu'à ce que la pièce d'assujettissement (134, 302, 304) soit bloquée au niveau d'un premier point souhaité afin de former une unité stationnaire de la plaque de soutien (120) avec le dispositif de couplage (102).

4. Le système d'ancrage (100, 200, 600) selon la revendication 3, comprenant en outre un dispositif de couplage (102) auxiliaire ayant la même structure que le dispositif de couplage (102), où le dispositif de couplage auxiliaire est disposé à côté du dispositif de couplage ou au niveau d'un deuxième point de la plaque de soutien (120).

5. Le système d'ancrage (100, 200, 600) selon la revendication 3 ou la revendication 4, comprenant en outre :
une plaque d'extension (122, 622, 622A, 622B) disposée en dessous de la plaque de soutien (120), où la plaque d'extension est
(a) une plaque d'extension fixe (622, 622A, 622B) formée par une partie découpée de la plaque de soutien (120) et positionnée de façon fixe dans un plan substantiellement transversal à un plan de la plaque de soutien ; ou
(b) une plaque d'extension articulée (122) attachée à la plaque de soutien (120) sur un côté de celle-ci qui est opposé au support (306), ladite plaque d'extension articulée (122) étant configurée pour pouvoir tourner autour d'une articulation (124) afin d'adopter une première position fermée dans laquelle la plaque d'extension articulée (122) est substantiellement parallèle à la plaque de soutien (120) et une deuxième position ouverte dans laquelle la plaque d'extension articulée (122) est substantiellement transversale à la plaque de soutien (120).

6. Le système d'ancrage (100, 200, 600) selon la revendication 5, où la plaque d'extension est la plaque d'extension articulée (122), et au moins un des faits suivants :
(a) où le système d'ancrage (100, 200, 600) comprend en outre un élément angulaire auxiliaire (125) ayant une première ailette et une deuxième ailette, où la première ailette est attachée à une plaque parmi la plaque de soutien (120) et la plaque d'extension articulée (122) sur un côté de celle-ci opposé à l'articulation (124), et un ou plusieurs faits parmi :
(i) où l'élément angulaire auxiliaire (125) est configuré comme une butée et la deuxième ailette est configurée pour coopérer avec l'autre plaque parmi la plaque d'extension articulée (122) et la plaque de soutien (120) lorsque la plaque d'extension articulée (122) est dans la deuxième position ouverte ; et
(ii) où le système d'ancrage (100, 200, 600) comprend en outre un premier aimant (312) et un deuxième aimant (312), le premier aimant étant attaché à la deuxième ailette de l'élément angulaire auxiliaire (125) et le deuxième aimant (312) étant attaché à l'autre plaque parmi la plaque d'extension articulée (122) et la plaque de soutien (120) afin d'interagir magnétiquement avec le premier aimant (312) lorsque la plaque d'extension articulée (122) est dans la deuxième position ouverte et d'empêcher la plaque d'extension articulée (122) de se déplacer vers la première position fermée en l'absence de force externe appliquée sur la plaque d'extension articulée (122) ; et
b) une longueur de la plaque d'extension articulée (122) est substantiellement égale à une longueur de la plaque de soutien (120).

7. Le système d'ancrage (100, 200, 600) selon l'une des revendications 1, 2, 3, 4, 5, et 6, où le système d'ancrage (100, 200, 600) comprend en outre un des organes suivants ou les deux :
a) un élément d'équipement de raccordement (AG) qui est attaché de façon mobile à l'élément de fixation (134, 302, 304) ou à la plaque de soutien (120) ou à la plaque d'extension (122, 622, 622A, 622B), et/ou
b) des premier et deuxième amortisseurs (104A-1, 104B-1) fixés respectivement à des surfaces des première et deuxième plaques (104A, 104B).

8. Le système d'ancrage (100, 200, 600) selon l'une des revendications 1 et 2, comprenant en outre :
un élément d'équipement de raccordement (AG), l'élément d'équipement de raccordement (AG) comprenant au moins un élément parmi une pince, un anneau d'arrêt à crochet, un mousqueton, et un élément dimensionné comme une boucle attaché à l'élément de fixation (134, 302, 304) de façon substantiellement non amovible.

9. Un procédé pour utiliser le système d'ancrage (100, 200, 600) selon n'importe laquelle des revendications 1 à 8 avec le composant de structure fixe, le procédé comprenant :
le fait de positionner le dispositif de couplage (102) sous le composant de structure fixe (103) de sorte que le composant de structure fixe (103) soit substantiellement aligné avec l'espace en forme de berceau (112) et que le levier (106) soit amené à pivoter pour positionner la surface courbe (110) du corps (106B) de levier dans la position fermée ; et
le fait d'amener le composant de structure fixe (103) en prise avec le dispositif de couplage (102) en déplaçant le dispositif de couplage (102) ou le composant de structure fixe (103) l'un par rapport à l'autre de telle sorte que le composant de structure fixe (103) entre dans l'espace en forme de berceau (112) et vienne en prise avec une partie de la surface courbe (110) et avec la première plaque (104, 104A) au sein de l'espace en forme de berceau (112), où le levier (106) est amené à pivoter pour déplacer la surface courbe (110) vers la position ouverte à mesure que le composant de structure fixe (103) se rapproche de la deuxième plaque (104, 104B) jusqu'à ce que le dispositif de couplage (102) soit substantiellement verrouillé sur le composant de structure fixe (103) avec le composant de structure fixe (103) dans ledit espace en forme de berceau (112) en raison de forces d'interaction entre le composant de structure fixe (103) et au moins une partie de la surface courbe (110) et la première plaque (104, 104A).

10. Le procédé selon la revendication 9, comprenant en outre
le fait d'amener la surface de dessous du composant de structure fixe (103) en contact avec la deuxième plaque (104, 104B) ou avec un organe disposé sur la deuxième plaque.

11. Le procédé selon l'une des revendications 9 et 10, où le système d'ancrage (100, 200, 600) comprend en outre une plaque de soutien (120) disposée en dessous de la deuxième plaque (104, 104B) et de façon parallèle à celle-ci, la plaque de soutien (120) ayant une fente (202, 204) dans celle-ci, et où l'élément de fixation (134, 302, 304) comprend une pièce d'assujettissement ayant une tige configurée pour passer à travers la fente,
le procédé comprenant en outre :
le fait de déplacer la plaque de soutien (120) et le dispositif de couplage (102) l'un par rapport à l'autre jusqu'à une position souhaitée de la tige au niveau d'un premier point dans ladite fente (202, 204), et
le fait de bloquer l'élément de fixation (134, 302, 304) afin de former une unité stationnaire de la plaque de soutien (120) avec le dispositif de couplage (102).

12. Le procédé selon la revendication 11, où le système d'ancrage (100, 200, 600) comprend en outre une plaque d'extension (122, 622, 622A, 622B), disposée en dessous de la plaque de soutien (120), où la plaque d'extension est :
(a) une plaque d'extension fixe (622, 622A, 622B) formée par une partie découpée de la plaque de soutien (120) et positionnée de façon fixe dans un plan substantiellement transversal à un plan de la plaque de soutien (120), ou
(b) une plaque d'extension articulée (122) attachée à la plaque de soutien (120) sur un côté de celle-ci qui est opposé au dispositif de couplage (102), ladite plaque d'extension articulée (122) étant configurée pour pouvoir tourner autour d'une articulation (124) afin d'adopter une première position fermée dans laquelle la plaque d'extension articulée (122) est substantiellement parallèle à la plaque de soutien (120) et une deuxième position ouverte dans laquelle la plaque d'extension articulée (122) est substantiellement transversale à la plaque de soutien (120).

13. Le procédé selon la revendication 12, où le système d'ancrage (100, 200, 600) comprend en outre un élément angulaire auxiliaire (125) ayant une première ailette et une deuxième ailette, où la première ailette est attachée à une plaque parmi la plaque de soutien (120) et la plaque d'extension articulée (122) sur un côté de celle-ci opposé à l'articulation (124),
le procédé comprenant en outre le fait de déplacer la plaque d'extension articulée (122) de la première position fermée à la deuxième position ouverte de sorte que la deuxième ailette vienne en contact avec l'autre plaque parmi la plaque d'extension articulée (122) et la plaque de soutien (120).

14. Le procédé selon l'une des revendications 11, 12 et 13, où le composant de structure fixe est une poutre (103) de chevron sous un toit, le procédé comprenant en outre :
lorsque la plaque d'extension articulée est dans la deuxième position ouverte sous le toit, le fait de réaliser une des actions suivantes :
a) le fait de rouler un élément à roues auxiliaire (702) le long d'un dessus de toit (704) jusqu'à ce que des roues (702B) sur un essieu de l'élément à roues auxiliaire (702) aient quitté le toit (704) et soient situées sous le toit (704) en contact avec ladite plaque d'extension articulée (122) pendant que des roues (702A) d'un autre essieu de l'élément à roues (702) restent sur le toit (704) ; et
b) le fait de placer un élément à roues auxiliaire (702) de telle sorte que des roues (702B) sur un essieu de l'élément à roues auxiliaire (702) soient situées sous le toit (704) en contact avec ladite plaque d'extension articulée (122) pendant que des roues (702A) d'un autre essieu de l'élément à roues auxiliaire (702) sont sur le toit (704).

15. Le procédé selon la revendication 12 où le composant de structure fixe est une poutre (103) de chevron sous un toit (704), le procédé comprenant en outre une des actions suivantes :
a) le fait de rouler un élément à roues auxiliaire (702) le long d'un dessus de toit (704) jusqu'à ce que des roues (702B) sur un essieu de l'élément à roues auxiliaire (702) aient quitté le toit (704) et soient situées sous le toit en contact avec ladite plaque d'extension fixe (622, 622A, 622B) pendant que des roues (702A) d'un autre essieu de l'élément à roues (702) restent sur le toit (704) ; et
b) le fait de placer un élément à roues auxiliaire (702) de telle sorte que des roues (702B) sur un essieu de l'élément à roues auxiliaire (702) soient situées sous le toit (704) en contact avec ladite plaque d'extension fixe (622, 622A, 622B) pendant que des roues (702A) d'un autre essieu de l'élément à roues auxiliaire (702) sont sur le toit (704).
